(19) **Europäisches Patentamt**

**European Patent Office**

**Office européen des brevets**

(11) **EP 0 909 237 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **97930431.8**

(22) Anmeldetag: **27.06.1997**

(51) Int Cl.⁷: **B32B 27/08**, B65D 81/26

(86) Internationale Anmeldenummer:
**PCT/EP97/03380**

(87) Internationale Veröffentlichungsnummer:
**WO 98/01299 (15.01.1998 Gazette 1998/02)**

(54) **SAUGFÄHIGE EINLAGEN, VERFAHREN ZU IHRER HERSTELLUNG UND IHRE VERWENDUNG**

ABSORBENT INSERTS, METHOD OF PRODUCING THEM AND THEIR USE

PIECES RAPPORTEES ABSORBANTES, PROCEDE PERMETTANT DE LES PRODUIRE ET UTILISATION

(84) Benannte Vertragsstaaten:
**AT BE CH DE DK ES FI FR GB IT LI NL PT SE**

(30) Priorität: **06.07.1996 DE 19627409**
**02.11.1996 DE 19645240**

(43) Veröffentlichungstag der Anmeldung:
**21.04.1999 Patentblatt 1999/16**

(73) Patentinhaber: **Stockhausen GmbH & Co. KG**
**47805 Krefeld (DE)**

(72) Erfinder:
• **JONAS, Gerd**
**D-47806 Kempen (DE)**
• **KLIMMEK, Helmut**
**D-47803 Krefeld (DE)**
• **KRAUSE, Frank**
**D-47533 Kleve (DE)**
• **PFLÜGER, Klaus**
**D-47807 Krefeld (DE)**

(56) Entgegenhaltungen:
**EP-A- 0 297 069          WO-A-90/03320**
**WO-A-92/02679          WO-A-97/30909**
**US-A- 4 865 855          US-A- 5 055 332**

**Beschreibung**

Die Erfindung betrifft eine neue und verbesserte saugfähige Einlage für Lebensmittelverpackungen, insbesondere für Fleisch, Geflügel, Fisch. Sie besteht aus einem flachen Beutel aus einer wasserdurchlässigen Folie und weist eine Füllung auf, die mindestens zum Teil durch ein superabsorbierendes Polymer mit hoher Gelfestigkeit, hoher Retention und niedrigen löslichen Anteilen gebildet wird. Die Einlage zeichnet sich durch eine schnelle und dauerhafte Aufnahme von aus dem Lebensmittel austretender Flüssigkeit aus und verlängert die Frischhaltezeit durch nachhaltige Verhinderung des mikrobiellen Wachstums. Darüber hinaus eignen sich die mit Wasser vollgesogenen Einlagen in gefrorenem Zustand hervorragend als Eisersatz zur Kühlung von Lebensmitteln.

Lebensmittel werden häufig in vorverpackter Form im Handel angeboten. Derartige Verpackungen bestehen überwiegend aus flachen Schalen, in denen die Lebensmittel nach außen von Luft,- wasser- und aromadichten Folien abgedeckt werden. Damit können weder die in den Lebensmitteln vorhandenen, noch die durch vorheriges Waschen anhaftenden wäßrigen Bestandteile aus den Verpackungen entweichen. Optisch sehr eindrucksvoll ist die Ansammlung von Flüssigkeit an der Grenzfläche zwischen Folie und rotem Fleisch. Dies hat einerseits ein unappetitliches Aussehen der verpackten Nahrungsmittel zur Folge und führt andererseits aufgrund der aus den Lebensmitteln zusammen mit den Flüssigkeiten austretenden Inhaltsstoffen zu einem unerwünschten, die Frischhaltezeit beeinträchtigenden mikrobiellen Wachstum und stellt darüber hinaus eine Quelle mikrobieller Infektionen dar. Von allgemeiner Bekanntheit ist die hohe Durchseuchung von Geflügel mit Bakterien der Art Salmonella.

Zur Überwindung dieser Probleme wurden saugfähige Unterlagen für verpackte Lebensmittel entwickelt, die vorwiegend aus mehreren Lagen Zellstoff zusammengesetzt sind. In der Praxis hat es sich jedoch herausgestellt, daß derartige Unterlagen die Anforderungen an Absorptionsfähigkeit und Rückhaltefähigkeit für wäßrige Flüssigkeiten unter dem Gewicht der auf ihnen lastenden Lebensmittel nicht erfüllen.

So kann beispielsweise eine üblicherweise sechslagige Schicht aus Zellstoffwatte bei einer Abmessung von 7x10 cm maximal nur etwa 8 bis 10 g Flüssigkeit aufnehmen. Wird nun ein Fleischstück in einer Verpackungsschale verpackt und dann zum Verkauf in einer Kühlvitrine bereitgehalten, so können bis zu 10% des Füllgewichts, bei einem Fleischstück von 500 g somit bis zu 50 g, an Fleischsaft abgegeben werden. Eine solche Menge übersteigt das Aufnahmevermögen der Absorptionsschicht aus Zellstoffvlies bei weitem. In der Folge kommt es zu die Haltbarkeit des Lebensmittels beeinträchtigendem Bakterienwachstum auf diesen feuchten, nicht sterilen Unterlagen.

Es hat daher eine Reihe von Bemühungen zur Entwicklung von Verpackungssystemen gegeben, um die von den Lebensmitteln abgesonderte Flüssigkeit durch Aufsaugen vom Lebensmittel zu trennen und damit keine Nährstoffe für ein Bakterienwachstum zu bieten.

Die DE 30 34 170 C2 beschreibt eine wasseradsorbierende Einlage für Lebensmittelverpackungen, insbesondere für Fleisch, Geflügel, Fisch und Wurst, die in einem flachen Beutel aus einer wasserdurchlässigen Folie eine Mischung aus Kieselgur und Aerosil enthält. Da das anorganische Füllmaterial die Flüssigkeit nur adsorbiert, ist seine Aufnahmekapazität gering, d.h. es werden für eine ausreichende Flüssigkeitsbindung unwirtschaftlich hohe Mengen Adsorbens benötigt, wodurch sich das Gewicht der Verpackung unerwünscht erhöht. Ein weiterer Nachteil der anorganischen Adsorber liegt in ihrem Unvermögen, die adsorbierte Flüssigkeit auf Dauer bzw. unter Druckbelastung festzuhalten.

Die DE 30 34 169 C2 schlägt als Füllmaterial für wasseradsorbierende Einlagen von Lebensmittelverpackungen Mischungen aus Kieselgur und einem organischen Gelbildner vor, wobei Carboxymethylcellulose, Zelluloseäther, Polyvinylpyrrolidon, Stärke, Dextrose, Gelatine und/oder Pectine genannt werden. Der Anteil der organischen Gelbildner soll bei 20 Gew. % liegen. Aufgrund der hohen löslichen Anteile bzw. der äußerst langsamen Quellungsgeschwindigkeit der genannten Verbindungen, ist die Verwendung derartiger adsorbierender Einlagen für Lebensmittel als kritisch anzusehen. Lösliche Anteile der organischen Gelbildner vermindern deren Quellfähigkeit und können aus der Einlage herauswandern und mit den Lebensmitteln in Kontakt treten, langsame Quellungsgeschwindigkeiten behindern die wirkungsvolle Aufnahme der Flüssigkeit in der Verpackung, so daß es zum Auslaufen von angesammelter Flüssigkeit kommen kann.

Die EP 302 504 B1 schlägt ein Saugkissen vor, das sich in einer Verpackung unter einem Nahrungsmittel anordnen läßt, das zum Absondern von Flüssigkeit neigt, z.B. Fleisch, Geflügel und dergleichen. Das Saugkissen wird durch eine Matte aus von Papier umhüllten flüssigkeitsaufsaugendem Holzflockenmaterial gebildet. Das mit Papier umhüllte Saugkissen ist wiederum mit einem flüssigkeitsundurchlässigen Material wie Polyethylen umhüllt, welches jedoch über eine Vielzahl von in Längsrichtung der Umhüllung verlaufenden Perforationen aufweist. Aufgrund der relativ niedrigen Saugkapazität und der niedrigen Schüttdichte von Holzflocken ist hierbei eine praxisgerechte Flüssigkeitsaufnahme nur mit einem unökonomisch hohen Verpackungsvolumen verbunden.

Die DE 43 25 879 C2 beschreibt Formgebilde aus thermoplastischen Kunststoffschäumen als Verpackungsmaterial für Feuchtigkeit enthaltendes Gut, bei denen die Zellstruktur des hydrophoben Schaumgerüstes teilweise offen ist und dadurch Flüssigkeiten aufnehmen, aber nicht fest binden kann. Zur Aufnahme von polaren Lösemitteln, wie etwa Wasser, müssen die hydrophoben Schäume zusätzlich mit bis zu 10 Gew.% tensidischen Benetzungsmitteln modifiziert werden. Um ein Zusammendrücken der Schäume unter der Last der Lebensmittel zu verhindern, sind Schäume höherer Dichte, d.h. höherer Festigkeit erforderlich. Das Absorptionsvermögen dieser Thermoplastschäume sinkt jedoch mit steigender Schaumdichte, d.h. mit steigender Festigkeit des Schaumes.

Zur Verbesserung der Absorptionsfähigkeit wurden superabsorbierende Polymere als Füllmaterial fiir Saugkissen vorgeschlagen. Sie haben gegenüber Zellstoff die Fähigkeit, größere Mengen wäßriger Flüssigkeit zu speichern.

In der DE 41 20 319 A1 bzw. in der DE 42 34 632 A1 werden schalenförmige Lebensmittel-Verpackungsbehälter beschrieben, in die ein Flüssigkeit-Absorbersystem integriert ist. Zur Aufnahme der von den Lebensmitteln freigesetzten Flüssigkeit werden bevorzugt Polyacrylatpolymere mit einer Feuchtigkeitsaufnahmekapazität im Bereich von 1 bis 100 ml/g eingesetzt, insbesondere werden die Alkalisalze von mit Stärke modifizierten Polyacrylaten bevorzugt verwendet. Den weiteren Ausführungen ist zu entnehmen, daß es zu einer Abscheidung von Feuchtigkeit am Füllgut kommt, wenn ein direkter Kontakt zwischen Absorber und Füllgut auftritt. Daraus ist zu folgern, daß die verwendeten Absorber nicht in der Lage sind, die Flüssigkeit aus dem Lebensmittel ausreichend fest zu binden bzw. unter Druck festzuhalten und daß bei direktem Kontakt möglicherweise lösliche Anteile des Absorbers auf das Lebensmittel übergehen könnten. Da sowohl ein enger Kontakt dieser absorbierenden Polymere mit dem Füllgut als auch eine Druckbelastung des gequollenen Absorbers vermieden werden muß, ist eine aufwendige Konstruktion des Verpackungsbehälters in Form einer zusätzlichen perforierten Bodenplatte mit Stützelementen erforderlich, die das Lebensmittel vom Absorber trennt.

Aus der EP 434 733 B1 sind Saugunterlagen als Tragschicht einer Fleisch- und Geflügelfleischpackung zum Sammeln der exsudierten Flüssigkeiten aus diesen Fleischprodukten bekannt. Im Inneren der Saugunterlage, die äußerlich von teilweise perforierter Kunststoff-Folie begrenzt wird, befinden sich Schichten aus Zellulose- und thermoplastischen Fasern, in denen superabsorbierende Polymerkörner aus Carboxymethylcellulose oder Acrylatabsorbern fixiert sind, wodurch die Retentionseigenschaften der Saugunterlage verbessert werden, damit auch unter Druckbelastung keine bereits absorbierte Flüssigkeit wieder abgegeben wird. Besondere Anforderungen bezüglich Absorptionsfähigkeit, Gelstabilität und lösliche Anteile werden an die Superabsorber nicht gestellt. Zur Vermeidung von Migration bei höherer Belastung des Saugkissens wird empfohlen, die obere, dem Lebensmittel zugewandte Folie nicht zu perforieren und die Flüssigkeit an den nicht völlig verschlossenen Seitenrändern in die Saugunterlage eindringen zu lassen.

In der US 4 449 977 wird ein flexibles absorbierendes Produkt beschrieben, welches in einer wasserunlöslichen, nicht quellbaren Matrix eines thermoplastischen Polymeren, und zwar eines Polyesters, gleichförmig dispergierte Teilchen eines wasserunlöslichen, wasserquellbaren organischen Polymeren enthält. Die Matrix hat bevorzugt die Form einer Folie. Das absorbierende Produkt wird durch Coextrusion der Mischung aus nichtwasserlöslichem Matrixmaterial (Polyester) und als absorbierendes Material eingesetzten wasserunlöslichen, jedoch wasserquellbaren organischen Polymeren hergestellt. Das Absorptionsmaterial kann aber auch auf die extrudierte Matrixschicht aufgebracht werden. Das absorbierende Produkt kann in einer Windel eingesetzt werden, wobei die das absorbierende Material enthaltende Matrix auf der einen Seite mit einer flüssigkeitsundurchlässigen Schicht auf der anderen Seite mit einer flüssigkeitsdurchlässigen Schicht bedeckt ist. Derartige absorbierende Produkte weisen den Nachteil auf, daß ein Teil der Absorberteilchen durch die hydrophobe Polyestermatrix am Aufquellen gehindert wird und daß die durchgängige Polyestermatrix eine Art Sperrschicht bei der Verteilung der aufzusaugenden Flüssigkeit bildet. Die vorgeschlagenen superabsorbierenden Polymere, u.a. vernetzte Polyalkylenoxide, mit Epichlorhydrin vernetzte Carboxymethylcellulose, teilverseiftes Polyacrylamid, hergestellt aus Acrylamid und N,N'- Methylenbisacrylamid entsprechen nicht den für Lebensmittelverpackungen zugelassenen Polymeren bzw. erfüllen nicht die Anforderungen an niedrige lösliche Anteile und Gelstabilität unter Belastung.

In der EP 320 314 B1 werden wasserabsorbierende, nicht gewobene Schichten aus oberflächlich anverseiften absorbierenden Polyacrylnitrilfasern beschrieben, die gegebenenfalls mit einer oberen und unteren Schutzschicht versehen sind. Aufgrund des niedrigen wäßrigen Absorptionsvermögens von 3 bis 5 g/g dieser Polyacrylnitrilfasern können die in vielen Lebensmittelverpackungen auftretenden hohen Flüssigkeitsmengen nicht quantitativ gebunden werden. Darüber hinaus blocken die dicht aneinanderliegenden Fasern im äußeren Bereich der Schicht nach der ersten Quellung den weiteren Zugang der wäßrigen Flüssigkeit in den inneren Bereich ab, wodurch ein nicht unwesentlicher Kapazitätsverlust auftritt.

Die EP 395 223 A2 beschreibt ein Saugkissen für wäßrige und organische Flüssigkeiten, das aus einem die Flüssigkeit absorbierenden Kern aus flüssigkeitsabsorbierenden Polymermaterial und einer unlöslichen, aber für die Flüssigkeit durchlässigen und flexiblen Umhüllung besteht. Das Saugkissen findet im Bereich der Hygieneprodukte, der Transportund der Lebensmittelverpackungen Verwendung. Die vorwiegend pulvrigen absorbierenden Polymermaterialien auf der Grundlage von synthetischen und/oder natürlichen Polymeren, u. a. vernetzte Polyacrylate, können auch auf einer oder zwischen zwei inneren wasserdurchlässigen Gewebeflächen verteilt sein, die wiederum von der äußeren Saugkissenhülle umschlossen sind. Die äußere Umhüllung ist flexibel genug, um dem Volumenzuwachs durch die Quellung des Absorberpolymers nachzugeben. Die zu verwendenden Polymerpulver sollen eine Teilchenverteilung zwischen 20 und 100 mesh und eine kräftige Absorption von 50 bis 600 g Salzlösung bzw. 600 bis 800 g Wasser/g Polymer bei geringen löslichen Anteilen aufweisen. Konkrete Anforderungen an die Höhe der löslichen Anteile sowie an die Gelfestigkeiten der gequollenen Absorber werden nicht gestellt. Die bevorzugten Polymere sind identisch mit denen, die auch in der nachfolgend zitierten EP 562 846 A1 als bevorzugt genannt werden.

EP 562 846 A1 beschreibt ein flaches und leichtes Kissen mit einer Füllung aus vernetzten superabsorbierenden Polymeren und einer flüssigkeitsdurchlässigen Umhüllung, die sich ab einer bestimmten Dehnung an einer vorgegebenen Stelle öffnen kann, das u.a. auch fiir die Lebensmittelverpackung verwendet werden kann. Die wasserunlöslichen, aber wasserquellbaren Absorber sind leicht bis mäßig vernetzt, haben eine geringe Löslichkeit und sind vorzugsweise Polymerisate von Acrylsäure oder Methacrylsäure bzw. deren Salzen. In einer hinsichtlich der Retention und Absorption besonders guten Ausführungsform wird ein Absorber eingesetzt, der mit Styrol entsprechend der US 4 677 174 copolymerisiert ist. Dort werden Polymere mit 0,001 bis 0,3 Gew.% Vernetzer vom Typ der Bisacrylamide und Arylsäureester von Polyolen bezogen auf die Monomeren beansprucht, in den Ausführungsbeispielen liegen die Vernetzerkonzentrationen weitgehend deutlich unter 0,1%. Angaben zu löslichen Anteilen werden in der US 4 677 174 nicht gemacht, dem Fachmann ist jedoch z.B. aus der WO 93/21237, Seite 17, Tabelle 1, bekannt, daß mit Vernetzern vom Typ der Acrylsäureester von Polyolen lösliche Anteile von 7,9 bis 19,2 % entstehen, wobei der niedrige Wert von 7,9 % aber bereits eine Vernetzerkonzentration von 0,9 Gew. %/Monomere erfordert. Diese Konzentration liegt aber weit über den in der US 4 677 174 empfohlenen oberen Grenzwert von 0,3 Gew.%. Daraus folgt, daß die niedrigen Vernetzerkonzentrationen zwar eine hohe Absorption liefern, allerdings wird diese nur mit dem Nachteil sehr hoher löslicher Anteile und geringer Gelstabilität erreicht. Für in Lebensmittelverpackungen einzusetzende Absorber sind jedoch weder hohe lösliche Anteile, noch niedrige Gelstabilitäten noch toxikologisch bedenkliche Vernetzer vom Typ der Bisacrylamide geeignet.

Die wesentlichen Probleme bei der Konstruktion/Funktion aller dieser bekannten Verpakkungssysteme mit Flüssigkeitsabsorbern liegen entweder in der viel zu geringen Aufnahmefähigkeit des Absorptionsmaterials, in der ungenügenden Sauggeschwindigkeit bzw. in der ungenügenden Druckfestigkeit (Gelstärke) des gequollenen Absorbers sowie vor allem in den zu hohen löslichen Anteilen, die mit den von den Lebensmitteln aufgesaugten Flüssigkeiten wieder in die Lebensmittel migrieren können. So wird z.B. weitgehend auf eine Perforation der dem Lebensmittel zugewandten Folie des Saugkissens verzichtet, um einen Kontakt mit austretender Flüssigkeit zu vermeiden. Dies führt immer wieder dazu, daß sich in Vertiefungen der oberen, dem Lebensmittel zugewandten Folie unerwünschterweise Exsudate ansammeln können und zum vorzeitigen Verderb der Lebensmittel beitragen.

In der US 4 321 997 wird daher eine aufwendige Konstruktion eines Saugkissens mit inneren Abstandshaltern vorgeschlagen, um ein Herausquetschen der aufgesaugten Flüssigkeit aus der absorbierenden Einlage zu verhindern. Der Superabsorber, falls ein solcher eingesetzt wird, befindet sich auf oder in der Flufflage des Saugkissens. Zur Vermeidung mikrobiellen Wachstums erfolgt ein, im Bereich der Lebensmittelverpackung generell bedenklicher Zusatz von Konservierungsmittel.

Das Problem der hohen löslichen Anteile stellt sich auch bei der Verwendung von superabsorbierenden Polymeren im Anwendungsbereich der Hygiene. Die dort geforderte hohe Absorption, gekoppelt mit ausreichender Gelfestigkeit, konnte zwar erreicht werden, jedoch wurde auch erkannt, daß die löslichen Anteile letztlich immer noch zu hoch waren. Insbesondere wurde erkannt, daß die löslichen Anteile, die sich erst nach langer Einwirkungszeit der wäßrigen Flüssigkeit auf den Absorber bilden, die längerfristige Absorptionsfähigkeit beeinträchtigen.

Die US Re. 32 649 beschreibt daher ein Polymerisationsverfahren unter sauren pH-Bedingungen zur Herstellung superabsorbierender Polymere mit niedrigen löslichen Anteilen fiir sanitäre Anwendungen auf Basis von Polyacrylaten. Aber auch die dort gezogenen Grenzwerte für lösliche Anteile nach einer Extraktionszeit von 16 h von maximal 17 Gew.%, bevorzugt maximal 10 Gew. %, wären für eine Anwendung im Bereich der Lebensmittelverpackung immer noch viel zu hoch.

So sieht die EG-Kommission für die Reglementierung von Lebensmittelverpackungen und anderen Bedarfsgegenständen als einen wichtigen Eckpunkt die Messung der Gesamtmigration (Globalmigration) bei einem zulässigen Höchstwert von 10 Milligramm migrierter Verpackungskomponente pro Quadratdezimeter Verpackungsfläche bzw. 60 Milligramm pro Kilogramm Lebensmittel vor. Diese Begrenzung soll ein Lebensmittel vor unzumutbaren Veränderungen durch die Verpackung schützen. In der Einzelrichtlinie 90/128 EWG wird speziell der Kontakt von Materialien und Bedarfsgegenständen aus Kunststoffen mit Lebensmitteln geregelt.

Die oben genannten Grenzwerte werden an sog. Simulanzlösemitteln gemäß der Richtlinie 85/572/EWG ermittelt, die destilliertes Wasser, 3%ige Essigsäure in wäßriger Lösung, 15%iges Ethanol in wäßriger Lösung und rektifiziertes Olivenöl umfassen. Für Fisch, Fleisch und Gemüse ist dort z.B. dest. Wasser als Simulanzlösemittel vorgesehen. In der Richtlinie 82/711/EWG zur Ermittlung der Migration aus Materialien fiir die Lebensmittelverpackung ist für eine Berührungszeit von > 24 Stunden eine Versuchszeit von 10 Tagen vorgesehen.

In Bezug auf Fleisch und Fisch sollte für das Simulanzlösemittel zusätzlich beachtet werden, daß aus diesen Lebensmitteln salzhaltige wäßrige Lösungen austreten, die einer physiologischen, d.h. einer 0,9 Gew.%igen Kochsalzlösung entsprechen. Vielfach ist auch das den Lebensmitteln anhaftende Waschwasser zu berücksichtigen. Das Gemisch aus Waschwasser Exsudat kann im Extremfall etwa einer 0,2 Gew.%igen Kochsalzlösung entsprechen. Da der Salzgehalt der wäßrigen Flüssigkeit jedoch entscheidend das Absorptionsverhalten der superabsorbierenden Polymere und deren löslichen Anteilen prägt, sind für die Beurteilung der Einlagen Migrationsversuche mit diesen salzhaltigen Flüssigkeiten unumgänglich.

Aufgabe der vorliegenden Erfindung ist es daher, neue, superabsorbierende Polymere enthaltende Einlagen für Lebensmittelverpackungen zur Verfügung zu stellen, die die erkennbaren Nachteile aus dem dargestellten Stand der Technik nicht aufweisen. Insbesondere gilt es auch Absorber für die Einlagen zur Verfügung zu stellen, die unter dem Druck der auf ihnen lastenden Lebensmittel eine hohe Absorptionsfähigkeit und Retention für Exsudate aus diesen Lebensmitteln aufweisen und die, entgegen den Erkenntnissen des Standes der Technik, trotz der hohen Absorption unter Druck nur geringe Mengen an löslichen Anteilen aufweisen. Die damit hergestellten Einlagen sollen die Exsudate aus den Lebensmitteln schnell und dauerhaft aufsaugen, ein im Vergleich zur aufgesaugten Flüssigkeit geringes Gewicht und Volumen aufweisen sowie vernachlässigbar niedrige Migrationswerte und einen ausreichenden Schutz gegen Bakterienwachstum erkennen lassen und der Geruchsbildung bei der Lagerung der Lebensmittel vorbeugen.

Die vorstehend genannte Aufgabe wird gelöst durch eine saugfähige Einlage für Verpackungen bestehend aus einer oberen und einer unteren Deckschicht und einem wäßrige Flüssigkeiten absorbierenden Kern, der absorbierende Polymere enthält und dadurch gekennzeichnet ist, daß die absorbierenden Polymeren einen Quotient $Q_{SAP\,0,3}$ berechnet aus Retention und Absorption unter Druck bei 0,3 psi (21 g/cm$^2$) und aus der Menge an löslichen Anteilen von mindestens 20 und eine Retention von mindestens 22 g/g jeweils gemessen und berechnet nach den nachstehend angegebenen Methoden aufweisen.

Der Quotient $Q_{SAP\,0,3}$ aus den Absorptionswerten, d.h. aus Retention (TB = Teebeuteltest, Beschreibung s. weiter unten) und Absorption unter Druck (AAP = Absorption Against Pressure) bei 0,3 psi (21 g/cm$^2$, Beschreibung s. weiter unten) und der Menge an löslichen Anteilen (LA), der in der Einlage enthaltenen absorbierenden vernetzten Polymeren ist wie folgt definiert:

$$Q_{SAP\,0,3} = \frac{\text{Retention (TB)+Absorption unter Druck (AAP) bei 0,3 psi}}{\text{lösliche Anteile (LA)}}$$

Für die erfindungsgemäßen Saugunterlagen hat es sich herausgestellt, daß der Quotient aus den Absorptionswerten und den löslichen Anteilen von entscheidender Bedeutung für die Funktionsfähigkeit der Unterlage ist. Je größer der Quotient durch die erfindungsgemäß einzusetzenden Vernetzer eingestellt wird, desto besser kann die Saugunterlage auch bei hoher Druckbelastung große Mengen Exsudate dauerhaft aufsaugen und die Lebensmittel vor bakteriellem Befall schützen und eine Kontamination des Lebensmittels mit zurückgewanderten Exsudaten bzw. Migraten der Saugunterlage verhindern. Mit den erfindungsgemäßen Saugunterlagen ist es auch möglich, mehrere Verpackungseinheiten übereinanderzustapeln, ohne daß in der untersten Verpackung die aufgesaugte Flüssigkeit wieder aus der Unterlage herausgedrückt wird.

In einer weiteren bevorzugten Ausführungsform der Erfindung werden superabsorbierende Polymere eingesetzt, die den erfindungsgemäß geforderten Quotienten auch für AAP 0,7 erfüllen ($Q_{SAP\,0,7}$). Saugunterlagen, die mit diesen Absorbern gefüllt sind, eignen sich ganz besonders fiir die zuvor genannten Anwendungen unter hoher Belastung durch das Lebensmittel.

Die erfindungsgemäß verwendeten Absorber weisen eine Retention (TB) von mindestens 22 g/g, vorzugsweise mindestens 25 g/g und besonders bevorzugt von mindestens 28 g/g auf, sowie eine Absorption unter Druck (AAP 0,3) von zweckmäßigerweise mindestens 15 g/g, vorzugsweise mindestens 20 g/g und besonders bevorzugt von mindestens 22 g/g und die löslichen Anteile (LA) betragen zweckmäßigerweise höchstens 3,5 Gew.%, vorzugsweise höchstens 2,5 Gew.% und besonders bevorzugt höchstens 1,5 Gew.%.

Die mit den erfindungsgemäßen superabsorbierenden Polymeren hergestellten Einlagen weisen niedrige Migrationswerte von zumeist kleiner 15 mg/g, bevorzugt von kleiner 10 mg/g und besonders bevorzugt von kleiner 5 mg/g Saugunterlage auf und schützen die Lebensmittel vor bakteriellem Befall.

Die erfindungsgemäße saugfähige Einlage besteht aus einem absorbierenden Kern und einer Umhüllung. Der absorbierende Kern enthält die erfindungsgemäßen superabsorbierenden Polymerteilchen, die gegebenenfalls von Fasern oder Gewebe umgeben sind, wobei die Polymerteilchen in die Fasern oder in das Gewebe gegebenenfalls eingebettet oder fixiert sind. Als vorteilhaft hat sich auch eine schichtweise Anordnung der superabsorbierenden Teilchen innerhalb des absorbierenden Kerns aus Fasern bzw. Gewebe gezeigt, wobei in der schichtweisen Anordnung Absorber häufig vorteilhaft mit unterschiedlicher Teilchengröße bzw. unterschiedlicher Absorptionsfähigkeit eingesetzt werden, um eine optimale Aufnahme und dauerhafte Speicherung der Exsudate zu erreichen.

Die verwendeten Fasern haben vorzugsweise ein Längen- zu Durchmesserverhältnis von größer oder gleich 50. Als Fasermaterial sind absorbierende oder nicht absorbierende natürliche oder synthetische , gekräuselte oder nicht gekräuselte Stapelfasern verwendbar. Geeignete Fasern schließen Zellulosefasern (u.a. Baumwolle, Holz), regenerierte Fasern (u.a. Viskose, Rayon) und synthetische Fasern u.a. Polyolefine, Polyacrylate, Polyamide, Polyester, Polystyrol) mit ein. Insbesondere bevorzugt werden Stapelfasern aus Polypropylen (PP), Polyethylen (PE) und Polyethylenterephthalat (PET).

In einer weiteren, bevorzugten Ausführungsform werden Fasern in Form von Hohlfasern verwendet, die in ihren Hohlräumen Flüssigkeiten speichern bzw. weiterleiten können.

Die Feinheit der erfindungsgemäß zu verwendenden Fasern liegt vorzugsweise im Bereich von 0,005 bis 3 den (0,006 bis 3,3 dtex) und die Länge kann zwischen 0,1 und 15 cm, bevorzugt zwischen 0,5 und 7,0 cm variieren.

Die erfindungsgemäß einzusetzenden faserigen Gewebe können nach allen bekannten Verfahren hergestellt werden. Beispielhaft seien kardierte Nadelvliese, thermisch oder durch Latex fixierte Vliese und Meltblown Vliese genannt.

Der Fasergehalt der Einlage liegt vorzugsweise im Bereich von 30 bis 300 g/m$^2$, besonders bevorzugt zwischen 40 und 100 g/m$^2$.

Faserige Gewebe können die von den Lebensmitteln abgesonderten Flüssigkeiten aufnehmen, wobei sowohl eine Absorption durch das Fasermaterial als auch eine Saugwirkung mit Einlagerung in den Faserzwischenräumen zum Tragen kommen kann.

Die Merkmale der erfindungsgemäß zu verwendenden Superabsorber sind nicht an bestimmte polymere Strukturen oder Herstellverfahren gebunden. Prinzipiell lassen sich alle die Superabsorber auf synthetischer oder natürlicher Basis verwenden, die den Anforderungen an den Quotienten aus (TB+AAP 0,3)/LA genügen und damit den erfindungsgemäßen Saugunterlagen eine ausreichende Funktionalität verleihen. Diese liegt einerseits in seiner Fähigkeit die Exsudate völlig, auch unter Druck zu absorbieren und ein Zurückfließen zum Lebensmittel möglichst zu verhindern und andererseits in Fällen ungewollter überschüssiger Flüssigkeitsmengen die Migration aus der Saugunterlage auf ein tolerierbares Minimum zu reduzieren.

Das erfindungsgemäß zu verwendende, wäßrige Flüssigkeiten absorbierende Polymerisat kann durch Polymerisation von ethylenisch ungesättigten, Säuregruppen tragenden Monomeren, beispielsweise Acrylsäure, Methacrylsäure, Vinylessigsäure, Maleinsäure, 2-Acrylamido-2-methylpropansulfonsäure, Vinylsulfonsäure, (Meth)allylsulfonsäure bzw. deren Gemische in Gegenwart von Vernetzern erhalten werden.

Optional können die erfindungsgemäßen Polymerisate weitere, in der wäßrigen Monomerlösung weitgehend lösliche Comonomere zur Modifizierung der Eigenschaften enthalten, sofern dem nicht lebensmittelrechtliche Bestimmungen entgegenstehen. Solche Comonomere, die bei der Herstellung von synthetischen Superabsorbern üblich sind, können nichtionisch, anionisch oder auch kationisch sein, beispielsweise seien Vinylpyrrolidon, Vinylacetamid, Hydroxyethylacrylat, Alkylarninoalkyl(meth)acrylate genannt. Gleichfalls können Gemische dieser Comonomere eingesetzt werden. Derartige Comonomere sollten einen Anteil von 40 Gew.% nicht überschreiten, da sie die Quellfähigkeit des Superabsorbers gegebenenfalls beeinträchtigen können.

Der Anteil an sauren Monomeren beträgt in der Monomermischung 55 - 99 Gew. %.

Überraschenderweise hat es sich gezeigt, daß durch eine bestimmte Kombination von Vernetzermischungen, Neutralisationsgrad und Ansatzkonzentration Superabsorber entstehen, die ein bisher nicht erreichtes Eigenschaftsniveau von hoher Retention, hoher Absorption unter Druck, schneller Flüssigkeitsaufnahme und extrem niedrigen löslichen Anteilen aufweisen und daher hervorragend für die Verwendung in Saugunterlagen von Lebensmittelverpakkungen zur Aufnahme von wäßrigen Flüssigkeiten geeignet sind. Selbstverständlich eignen sich die erfindungsgemäß zu verwendenden Superabsorber auch hervorragend für einen Einsatz in der Hygieneindustrie (Windeln, Binden etc.) und in Transportverpackungen.

Als Bestandteile der Vernetzermischungen kommen in einer erfindungsgemäßen Ausführungsform solche vom Typ Di- und Triallylamin (Vernetzergruppe A), Acrylat- und Methacrylatester von Polyolen (Vernetzergruppe B) in Betracht, insbesondere Ester von Polyhydroxyverbindungen mit ungesättigten Carbonsäuren die in einer bevorzugten Ausführungsform alkoxyliert sind. Bevorzugt werden C3-6-Polyhydroxyverbindungen mit 2-4 Hydroxylgruppen als Ausgangsverbindungen für die Synthese derartiger Vemetzer, beispielsweise Trimethylolpropan, Glycerin, Pentaerythrit, 1,3-Propandiol, Propylenglykol oder 1,4-Butandiol. Findet vor der Veresterung eine Alkoxylierung des Alkohols statt, so wird bevorzugt Ethylenoxid eingesetzt. Bevorzugt werden alkoxylierte Polyhydroxyverbindungen eingesetzt, die mindestens 1 Mol Ethylenoxid, bevorzugt mindestens 3 Mol Ethylenoxid pro Mol Polyhydroxyverbindung angelagert haben. Weitere bevorzugte Vernetzer sind Polyethylenglykol-diacrylat bzw. -dimethacrylat, die Polyethylenglykolreste mit 3 bis 20 EO-Einheiten enthalten. Acrylat- bzw. Methacrylatester von alkoxyliertem Allyl- bzw. Methallylalkohol (Vernetzergruppe C) haben sich ebenfalls als hervorragend geeignete Vernetzer erwiesen. Bevorzugt enthalten diese Vernetzer mindestens drei, besonders bevorzugt 5 bis 20 Ethylenoxideinheiten zwischen den ungesättigten Gruppen.

Die Vernetzer zeigen in Abhängigkeit vom Neutralisationsgrad unterschiedliche Vernetzungsaktivität, so daß von Fall zu Fall gewisse Anpassungen vorgenommen werden müssen. So reagiert beispielsweise ein Methacrylatester von einem alkoxylierten Methallylalkohol bei hohen Neutralisationsgraden besser als bei niedrigen.

Die erfindungsgemäß zu verwendenden Acrylat- bzw. Methacrylatester-Vernetzer sind teilweise im Handel erhältlich, z.B. Trimethylolpropan-oxethylat-triacrylat von der Fa. Cray Valley unter der Bezeichnung Sartomer SR 415 (20EO), Craynor 435 (15EO), Sartomer RO 208 (9EO), Sartomer 454 (3EO) bzw. Pentaerythrit-oxethylat-tetraacrylat unter der Bezeichnung Craynor SR 494 (5EO) und Servocure RTT 192 (5EO) von der Fa. Servo Delden BV, Glycerin-ethoxylat-triacrylat (5,5EO) unter der Bezeichnung Sartomer 921 und Glycerin-propoxylat-triacrylat unter der Bezeichnung Sartomer 9021 von der Fa. Cray Valley sowie Polyethylenglykol-400-diacrylat als Craynor SR 344 bzw. Polyethylenglykol-600-dimethacrylat als Craynor SR 252 von der Fa. Cray Valley.

Es wurde nun gefunden, daß die Vernetzerkombination neben einem Vernetzer aus der Gruppe A immer mindestens einen weiteren Vernetzer aus den unterschiedlichen Vernetzergruppen B) und C) enthalten muß.

Eine bevorzugte Vernetzerkombination I) setzt sich aus

0,05 bis 0,8 Gew.%, vorzugsweise 0,2 bis 0,6 Gew.% Vernetzer vom Typ A,

0,05 bis 1,4 Gew.%, vorzugsweise 0,1 bis 1,0 Gew.% Vernetzer Typ B und optional

0 bis 0,5 Gew.% Vernetzer vom Typ C zusammen.

Eine weitere bevorzugte Vernetzerkombination II) setzt sich aus

0,05 bis 0,8, vorzugsweise 0,3 bis 0,8 Gew.% Vernetzer vom Typ A,

0,05 bis 1,5 Gew.%, vorzugsweise 0,4 bis 0,9 Gew.% Vernetzer Typ C und optional

0 bis 0,5 Gew.% Vernetzer vom Typ B zusammen.

Das Verhältnis der Vernetzer zueinander kann im Einzelfall ohne großen Aufwand durch wenige Optimierungsversuche ermittelt werden. Die erfindungsgemäß einzusetzende Gesamtmenge an Vernetzer liegt im Bereich von 0,7 bis 2,0 Gew.%, vorzugsweise 0,9 bis 1,5 Gew.% bezogen auf die eingesetzten Monomeren.

Das Ausmaß der Neutralisation der sauren Monomeren während der Polymerisation hat einen großen Einfluß auf die Eigenschaften der entstehenden Superabsorber.

Sehr gute Eigenschaften erhält man, wenn die sauren Monomeren zu 15 bis 80 Mol.% und bevorzugt zu 30 bis 70 Mol.% und besonders bevorzugt zu 40 bis 70 Mol.% neutralisiert sind und beispielsweise als Natrium-, Kalium- oder Ammoniumsalz bzw. deren Gemische vorliegen. Die Neutralisation wird entweder durch die Zugabe von Alkali- bzw. Ammoniumhydroxyden oder mit den entsprechenden Carbonaten oder Hydrogencarbonaten ausgeführt. In manchen Fällen kann es günstiger sein, die Monomere vor der Polymerisation nicht, oder nur gering neutralisiert einzusetzen und die endgültige Neutralisation erst nach der Polymerisation durchzuführen.

Die maximale Monomerkonzentration richtet sich danach, wie in dem angewandten Polymerisationsverfahren die Polymerisationswärme abgeführt werden kann. Im Verfahren der wäßrigen Gelpolymerisation kann die Monomerkonzentration vorzugsweise bis zu 35 Gew.% betragen, sehr gute Produkteigenschaften werden jedoch in einem Bereich von 23 bis 29 Gew. % erhalten.

Die erfindungsgemäßen Polymerisate können wasserlösliche Polymere als Pfropfgrundlage in Mengen bis zu 30 Gew.% enthalten. Dazu zählen unter anderem teil- oder vollverseifte Polyvinylalkohole, Stärke oder Stärkederivate, Zellulose oder Zellulosederivate, Polyacrylsäuren, Polyglykole oder deren Gemische. Die Molekulargewichte der als Pfropfgrundlage zugesetzten Polymere müssen an die Gegebenheiten der Polymerisationsbedingungen angepaßt sein. So kann es z.B. im Falle einer wäßrigen Lösungspolymerisation aus Gründen der Viskosität der Polymerisatlösung erforderlich sein, nur niedrig- oder mittelmolekulare Polymere einzusetzen, wohingegen bei der Suspensionspolymerisation dieser Faktor eine untergeordnete Rolle spielt.

Neben Polymerisaten, die durch vernetzende Polymerisation teilneutralisierter Acrylsäure zu erhalten sind, werden bevorzugt solche verwendet, die zusätzliche Anteile von pfropfpolymerisierter Stärke oder von Polyvinylalkohol enthalten.

Der Zusatz von Natur- und/oder Synthesefasern bewirkt eine schnellere Flüssigkeitsaufnahme und eine erhöhte Retention des erfindungsgemäßen Superabsorbers.

Die bevorzugte Herstellung der erfindungsgemäß zu verwendenden Superabsorber geschieht prinzipiell nach zwei Methoden:

Nach der ersten Methode wird die teilneutralisierte Acrylsäure in wäßriger Lösung in Gegenwart der erfindungsgemäßen Vernetzer sowie gegebenenfalls weiterer Vernetzer, Comonomere und Pfropfpolymere durch radikalische Polymerisation in ein Gel überführt, das dann zerkleinert, getrocknet, gemahlen und gegebenenfalls nachvernetzt und gegebenenfalls mit Konditioniermitteln behandelt und auf die gewünschte Partikelgröße abgesiebt wird. Die Lösungspolymerisation kann kontinuierlich oder diskontinuierlich durchgeführt werden. Die Patentliteratur weist sowohl ein breites Spektrum an Variationsmöglichkeiten hinsichtlich der Konzentrationsverhältnisse, Temperaturen, Art und Menge der Initiatoren als auch eine Vielzahl von Nachvernetzungsmöglichkeiten aus. Typische Verfahren sind in den folgenden Patentschriften beschrieben, die hiermit Bestandteil des erfindungsgemäßen Herstellverfahrens werden sollen: US 4 076 663, US 4 286 082, DE 27 06 135, DE 35 03 458, DE 40 20 780, DE 42 44 548, DE 43 23 001, DE 43 33 056, DE 44 18 818.

Die zweite Methode umfaßt das inverse Suspensions- und Emulsionspolymerisationsverfahren. In diesen Prozessen wird eine wäßrige, teilneutralisierte Acrylsäurelösung mit Hilfe von Schutzkolloiden und/oder Emulgatoren in einem hydrophoben, organischen Lösungsmittel dispergiert und durch Radikalinitiatoren die Polymerisation gestartet. Die Vernetzer sind entweder in der Monomerlösung gelöst und werden mit dieser zusammen dosiert oder aber separat und gegebenenfalls nachträglich zugefügt. Die Zugabe von gegebenenfalls vorhandenen polymeren Pfropfgrundlagen erfolgt über die Monomerlösung oder durch direkte Vorlage in die Ölphase. Nach Beendigung der Polymerisation wird das Wasser azeotrop aus dem Reaktionsgemisch entfernt und das Polymerprodukt abfiltriert.

Eine Oberflächenvernetzung der Polymerteilchen dient für gewöhnlich dazu, die Absorption von Flüssigkeit unter Druck zu erhöhen. Sie kann sowohl in der Suspension als auch nachträglich am isolierten Polymerpulver vorgenommen werden. Das Verfahrensprinzip ist beispielsweise in den Patentschriften US 43 40 706, DE 37 13 601, DE 28 40 010 beschrieben und soll hiermit als Bestandteil des erfindungsgemäßen Herstellverfahrens betrachtet werden.

Der Zusatz der Nachvernetzer erfolgt häufig vorteilhafterweise auch in Form einer Lösung in Wasser, organischen Lösemitteln oder deren Mischungen, insbesondere dann, wenn geringe Mengen an Nachvemetzungsmittel angewandt werden. Geeignete Mischaggregate zum Aufbringen des Nachvernetzungsmittels sind z.B. Patterson-Kelley-Mischer, DRAIS-Turbulenzmischer, Lödigemischer, Ruberg-Mischer, Schneckenmischer, Tellermischer und Wirbelschichtmischer, sowie kontinuierlich arbeitende senkrechte Mischer in denen das Pulver mittels rotierender Messer in schneller Frequenz gemischt wird (Schugi-Mischer). Nachdem der Nachvernetzer mit dem vorvernetzten Polymer vermischt worden ist, wird zur Durchfiihrung der Nachvernetzungsreaktion auf Temperaturen von 120 bis 250 °C, bevorzugt auf 135 bis 200°C und besonders bevorzugt auf 150 bis 185°C erhitzt. Die Zeitdauer der Nacherhitzung ist durch den Punkt begrenzt, bei dem das gewünschte Eigenschaftsprofil des Superabsorbers infolge von Hitzeschädigung wieder zerstört wird.

Geeignete Nachvernetzer enthalten in der Regel mindestens zwei funktionelle Gruppen. Dabei sind Alkohol-, Amin-, Aldehyd- Glycidyl- und Epichlorfunktionen bevorzugt, wobei auch Vernetzermoleküle mit mehreren verschiedenen Funktionen denkbar sind. Bevorzugt wird eines der folgenden Nachvernetzungsmittel eingesetzt: Ethylenglykol, Diethylenglykol, Triethylenglykol, Polyethylenglykol, Glycerin, Polyglycerin, Propylenglykol, Diethanolamin, Triethanolamin, Polypropylenoxid, Blockcopolymere aus Ethylenoxid und Propylenoxid, Sorbitanfettsäureester, ethoxylierte Sorbitanfettsäureester, Trimethylolpropan, ethoxyliertes Trimethylolpropan, Pentaerythrit, ethoxyliertes Pentaerythrit, Polyvinylalkohol, Sorbit, Ethylencarbonat, Proypylencarbonat und Polyepoxide wie etwa Ethylenglykoldiglycidylether. Besonders bevorzugt wird mit Ethylencarbonat als Nachvernetzungsmittel gearbeitet. Das Nachvernetzungsmittel wird in einer Menge von 0,01 bis 30 Gewichtsprozent, bevorzugt 0,1-10 Gewichtsprozent, besonders bevorzugt 0,1-1 Gewichtsprozent bezogen auf das nachzuvernetzende Polymer eingesetzt.

Vielfach werden die erfindungsgemäß einzusetzenden Superabsorber noch mit dem Fachmann bekannten und üblichen Konditioniermitteln versetzt, um z.B. die statische Aufladung oder die ungewollte Agglomeration zu verhindern. Beispielsweise verwendet man hierfür Stearate und Polyalkylenglykole.

Die erfindungsgemäß einzusetzenden superabsorbierenden Polymere liegen vorzugsweise in einem Teilchengrößenbereich von 10 bis 1000 μm und besonders bevorzugt zwischen 100 und 850 μm vor. Die Teilchen sind in der Einlage verteilt und quellen beim Aufsaugen der Flüssigkeit zu einem Gel auf. Neben der bevorzugt homogenen Verteilung der Teilchen kann es in vielen Fällen für eine verbesserte Absorption bzw. Absorptionsgeschwindigkeit vorteilhaft sein, einen Konzentrationsgradienten und/oder Teilchengrößengradienten des Absorbers innerhalb des Kerns aufzubauen. Der Anteil des superabsorbierenden Polymers beträgt bezogen auf das Fasergewicht 30 bis 150 Gew. %, vorzugsweise 50 bis 100 Gew.%. In einer bevorzugten Ausführungsform hat sich die Verwendung von 30 bis 50 g/$m^2$ des erfindungsgemäßen superabsorbierenden Polymers in einer Fasermatrix von 60 bis 90 g/$m^2$ als ausreichend zum Aufsaugen der Flüssigkeitsabsonderungen aus Lebensmitteln herausgestellt.

Die äußere Umhüllung der Einlage besteht aus einer unteren und einer oberen perforierten Folie und/oder einem Vlies aus Kunststoff, durch die die Flüssigkeit in den absorbierenden Kern eindringen kann. Es ist durchaus möglich, die Perforation nur auf einer Seite der Umhüllung vorzunehmen, doch ist aufgrund der äußerst niedrigen Migrationswerte der erfindungsgemäßen Saugunterlagen gerade auch eine Perforation der Umhüllung auf Seiten des Lebensmittels vorteilhaft möglich, da so gut wie keine Migrate an das Lebensmittel gelangen können. Häufig ist es zur Verbesserung der Absorption auch von Vorteil, die Perforationsdichte von Ober- und Unterseite unterschiedlich zu gestalten. Als Kunststoffe werden beispielsweise Polyethylen, Polypropylen, Polyamid, Polyester und Polyvinylchlorid mit Flächengewichten von 12 bis 25 g/$m^2$, vorzugsweise 15 bis 20 g/$m^2$ verwendet. Vorzugsweise sind die oberen und unteren Folien an den Kanten miteinander verbunden. Hierzu werden die Ränder der Umhüllungsmaterialien beispielsweise unter Temperatur und Druck miteinander verschweißt oder aber häufig auch mit Schmelzklebern verklebt. In vielen Fällen kann auch eine mechanische Verbindung in Frage kommen, beispielsweise durch das Vernähen der Kanten von Umhüllungen. Gelegentlich werden auch klebende und/oder schweißende und mechanische Verbindungen kombiniert. In jedem Fall ist es aber sichergestellt, daß die Pulver der superabsorbierenden Polymere die Umhüllung nicht verlassen und an die Lebensmittel gelangen können.

Für besondere Verpackungseinheiten kann gegebenenfalls auf Saugunterlagen zurückgegriffen werden, in denen der absorbierende Kern lediglich aus dem superabsorbierenden Polymer besteht und keine weiteren inneren faserartigen Materialien enthält.

Auch im Falle des Einsatzes der Saugunterlagen als Eisersatz bestehen diese vorzugsweise nur aus der umhüllenden Folie bzw. Vlies und den erfindungsgemäß einzusetzenden Superabsorbern. Nach dem Aufquellen mit Wasser werden die Unterlagen eingefroren und anstelle von Eis zur Kühlung von Lebensmitteln benutzt. Im Gegensatz zur Kühlung mit Eis tritt hier kein Tauwasser auf.

Unter den vielen möglichen Formen der Einlage ist die rechteckige oder quadratische bevorzugt, wobei jedoch fiir spezielle Verpackungsbehälter auch andere, etwa runde Formen verwendet werden. Oftmals ist es vorteilhaft, die Einlage dergestalt zu modifizieren, daß statt einer durchgehenden einheitlichen eine Art wabenförmiger Struktur entsteht, in der quasi viele einzelne Saugkissen nebeneinander vorhanden sind. Diese wabenförmige Unterteilung kommt besonders vorteilhaft dann zur Geltung, wenn eine relativ großflächige Saugunterlage als saugende Komponente nur mit Superabsorber, d.h. ohne Faser- bzw. Vliesbestandteile gefüllt ist, weil damit eine dauerhafte gute Verteilung des Absorbers über die Fläche gewährleistet ist.

**Prüfmethoden**

Retention TB (Superabsorber)

Die Retention wird nach der Teebeutelmethode bestimmt. Hierbei werden 200 mg Prüfsubstanz in einem Teebeutel eingeschweißt und für 30 Minuten in einer 0,9%igen NaCl-Lösung eingetaucht, 10 Minuten abgetropft und in einer Schleuder (23 cm Durchmesser, 1400 UPM) 5 Minuten geschleudert und gewogen. Einen Teebeutel ohne wasserabsorbierendes Polymerisat läßt man als sogenannten Blindwert mitlaufen:

$$TB = (Auswaage - Blindwert) / Einwaage (g/g)$$

Absorption unter Druck AAP (Superabsorber)

Die Fähigkeit eines wasserabsorbierenden Polymerisates unter einem definierten Druck Flüssigkeit aus einem Reservoir aufzunehmen (Absorption Against Pressure(0,3 psi = 21 g/cm$^2$), AAP(0,7 psi = 49 g/cm$^2$), wird wie folgt bestimmt: 900 mg Prüfsubstanz werden in einem Plastikzylinder (Innendurchmesser = 6 cm, Höhe = 5 cm) mit Siebgewebe (Maschenweite = 400 mesh) als Boden eingewogen, gleichmäßig verteilt und mit einem definierten Gewicht in Form einer Kunststoffplatte (Durchmesser = 5,98 cm) zusammen mit einem Metallstempel (Durchmesser = 5,98 cm) belastet. Die Kunststoffplatte liegt zwischen Prüfsubstanz und Metallstempel. Die ganze Prüfeinheit wird anschließend auf eine mit einem Filterpapier abgedeckte und mit 0,9%iger NaCl-Lösung getränkte Glasfilterplatte (Durchmesser = 12 cm, Porosität = 0) gestellt. Die Filterplatte liegt bis zu ihrer Oberkante in der NaCl-Lösung. Man läßt die Prüfsubstanz 60 Minuten Flüssigkeit aufnehmen:

$$AAP(0,3 bzw. 0,7 psi) = (Gewicht der Prüfeinheit vor dem Saugen - Gewicht der Prüfeinheit$$

nach dem Saugen) / Einwaage Prüfsubstanz (g/g)

Lösliche Anteile LA (Superabsorber)

In einem 250 ml Erlenmeyerkolben werden 100 g 0,9 %ige Kochsalzlösung vorgelegt und mit einem Magnetrührer bei 500 Upm gerührt. Es werden 0,2 g Superabsorber eingewogen. Nach vollständigem Eintrag wird 16 Stunden bei geschlossenem Kolben gerührt. Anschließend filtriert man über einem Glasmikrofilter ab. Die abfiltrierte Lösung wird mit Natronlauge auf einen pH-Wert von ca. 10,0 eingestellt. Anschließend wird mit 0,1n Salzsäure bis auf einen pH-Wert unter 3,0 titriert. Man erhält eine Titrationskurve mit zwei Wendepunkten. Der 1. Äquivalenzpunkt entspricht überschüssigem Natriumhydroxid bei pH 8,0 bis 8,4 und der 2. Äquivalenzpunkt entspricht verdrängter Acrylsäure bei pH 4,0 bis 4,3. Die Differenz der Salzsäuremenge zwischen den Wendepunkten ergibt die gesamte Menge an Acrylaten und damit den wasserlöslichen Anteil des Superabsorbers. Berechnung:

$$\% \text{ lösliche Anteile (LA)} = \frac{(V2-V1) \cdot C \cdot \text{Äquivalentgewicht*} \cdot 100.2}{EW \cdot 10 \cdot VF}$$

V2 = Verbrauch an HCl bis zum 2. Wendepunkt [ml]
V1 = Verbrauch an HCl bis zum 1, Wendepunkt [ml]
C = Normalität der HCl [Mol/1000 ml
EW = Einwaage Superabsorber [g]
VF = Menge Filtrat [g]
(*) = Äquivalentgewicht wird aus dem Neutralisationsgrad des Superabsorbers berechnet

Geschwindigkeit der Flüssigkeitsaufnahme (SG)

Bei diesem Test wird die Zeit gemessen, in der 1 g Superabsorber 20g einer 0,2%igen Kochsalzlösung bei Raumtemperatur aufsaugt. Der Ablauf dieser Prüfung ist in der EP 443 627, Seite 12, "Free-Swell-Rate", geschildert.

Restmonomere (Superabsorber)

Die Restmonomeren (RM) werden aus dem Filtrat von der Bestimmung der löslichen Anteile mittels HPLC-Methode ermittelt und nach dem Verfahren des inneren Standards ausgewertet.

Migrationsmessung (Saugunterlage)

Die Saugunterlage wird in einem 250 ml Schraubdeckelglas mit einer Testflüssigkeit übergossen und darin für 10 Tage bei Raumtemperatur ohne Bewegung gelagert.
Die Testflüssigkeit kann aus dest. Wasser, 0,2 %iger oder 0,9%iger Kochsalzlösung bestehen und wird mit einem Überschuß, bezogen auf die Absorptionskapazität der Saugunterlage eingesetzt. Dieser Überschuß soll den Fall simulieren, bei dem die Unterlage einer größeren Flüssigkeitsmenge als vorhergesehen ausgesetzt ist.
Anschließend wird die vom Saugkissen nicht aufgesaugte Testflüssigkeit über ein 45µ-Filter abgesaugt und hinsichtlich der aus der Saugunterlage migrierten Anteile untersucht. Verwendet man dest. Wasser als Testflüssigkeit, so ergeben sich die migrierten Anteile aus dem Trockenrückstand der abgesaugten Wasserphase. Werden dagegen 0,2%ige bzw. 0,9%ige wäßrige Kochsalzlösungen als Testflüssigkeit eingesetzt, so ist von dem Trockenrückstand der Natriumchloridgehalt abzuziehen, um den Migrationswert zu erhalten. Die Ergebnisse werden als mg Migrat pro $dm^2$ oder pro g Saugunterlage angegeben.

Messung der mikrobiellen Kontamination

Eine Petrischale wird mit dem jeweiligen Saugkissen und einer Nährbouillon beschickt. Die Menge an Nährbouillon ist so bemessen, daß sie von dem Saugkissen vollständig aufgenommen wird. Anschließend wird bei 30°C für 48 h im Brutschrank inkubiert. Zur Sichtbarmachung mikrobiellen Wachstums wird die Bouillon mit Triphenyl tetrazolium chlorid (TTC) versetzt (2 Tropfen 1%ige TTC-Lösung/9 ml Bouillon). TTC wird durch die mikrobielle Aktivität von einer farblosen Lösung zu einer stark rötlichen Färbung reduziert und kann somit als ein qualitatives Maß für mikrobielle Aktivität herangezogen werden.
Zur quantitativen Bestimmung der mikrobiellen Tätigkeit mittels 1%iger TTC-Lösung werden Teebeutel mit und ohne Superabsorber mit Blut und Gewebewasser (Auftauwasser) eines käuflich erworbenen handelsüblichen Suppenhuhns (tiefgekühlt) inkubiert. Der Teebeutel wird anschließend mit einem Dünnschichtscanner (Desaga CA 60 Dünnschichtscanner) bei λ=435 nm vermessen und gegen eine weiße Kieselgel DC-Platte verglichen. Das typische Auftauwasser enthält ca. $10^4$ Keime/ml. Die erhaltenen relativen Peakhöhen werden zueinander in Beziehung gesetzt und als Maß für die mikrobielle Aktivität hinsichtlich der Keimzahlvermehrung (Tiefe der Rotfärbung) als auch der flächenhaften Ausbreitung (Größe der rotgefärbten Fläche) herangezogen.
Die folgenden Beispiele zeigen den Aufbau einiger erfindungsgemäßer Saugunterlagen, die vorteilhaft niedrigen Migrationswerte in Wasser und wäßrigen Lösungen und die antimikrobielle Wirkung. Weiterhin werden die Herstellung von in den Saugunterlagen vorteilhaft einzusetzenden Superabsorbern unter Verwendung der speziellen Vernetzerkombinationen beschrieben und die günstige Eigenschaftskombination aus Retention, Absorption unter Druck und löslichen Anteilen dargestellt.

**Beispiel 1:**

Es wurde eine saugfähige Einlage folgenden Aufbaues hergestellt:

A: Obere und untere Deckfolie aus einem perforierten Polyethylenfilm mit 16 g/m² Hersteller Paramount Packaging, USA,
B: Polypropylenfasem 3d, 64 mm Faserlänge, 79 g/m², Typ 123 der Fa. HERCULES INC., Wilmington, USA
C: Superabsorbierendes Polymer gemäß Beispiel 5, 43 g/m², in die B-Lage zwischen die Polypropylenfasern gleichmäßig eingestreut.

Der Kern der Einlage aus B+C hat die Abmessungen 76x127 mm, die Einlage selber mißt 89x140 mm und ist an den Rändern durch eine Schweißnaht geschlossen.

**Beispiel 2:**

In Anlehnung an Beispiel 1 wurde eine saugfähige Einlage hergestellt:

A: Oberes und unteres Vlies aus Polypropylen, 17 g/m$^2$, Hersteller Fa. SCOTT PAPER, Polypropylenfasern von der Fa. HERCULES INC., Wilmington, USA
B: Film aus perforiertem Polyethylen mit 16 g/m$^2$, jeweils über und unter der C-Schicht
C: Polypropylenfasern 3d, 64 mm Faserlänge, 68 g/m$^2$, Typ 123 der Fa. HERCULES INC., Wilmington, USA,
D: Superabsorbierendes Polymer gemäß Beispiel 4,42 g/m$^2$, gleichmäßig in die Polypropylenfasern der Schicht C eingestreut.

Der Kern der Einlage aus B+C+D hat die Abmessungen 76x127 mm, die Einlage selber mißt 89x140 mm und ist am Rand geschlossen.

**Beispiel 3:**

Es wurde eine saugfähige Einlage auf einer Produktionsmaschine mit einer Geschwindigkeit von ca. 5,5 bis 6,5 m/min hergestellt, der Aufbau ist wie folgt:

A: Oberes und unteres Vlies aus Polyethylenterephthalat, 17 g/m$^2$
B: Fasern aus Polyethylenterephthalat, 65 g/m$^2$
C: Superabsorbierendes Polymer gemäß Beispiel 7, 50 g/m$^2$, in die B-Faserlage gleichmäßig eingestreut

Die einzelnen Lagen wurden untereinander durch Nadelung mechanisch verbunden (needlepunched).

**Beispiel 4 - 13**

Erfindungsgemäß einzusetzende superabsorbierende Polymere wurden nach der folgenden Richtrezeptur polymerisiert:

In einem zylindrischen Kunststoffgefäß wird ein Polymerisationsansatz von insgesamt 1000g zubereitet. Dazu werden 280 g Acrylsäure fiir Ansätze mit 28% WS bzw. 240 g Acrylsäure für Ansätze mit 24% WS sowie die verwendeten Vernetzer, Comonomere und weitere Komponenten in vollentsalztem Wasser vermischt. Unter Rühren und Kühlen wird mit 50%-iger Natronlauge bis zu dem in der Tabelle 1 angegebenen Neutralisationsgrad (NG) teilneutralisiert. Die Lösung wird auf 7-8°C abgekühlt und mit Stickstoff solange durchperlt, bis der Sauerstoffgehalt in der Monomerenlösung auf einen Wert von unter 0,2 ppm abgesunken ist. Anschließend gibt 100 ppm Azo-bis( 2-amidinopropan) dihydrochlorid gelöst in 10 g VE-Wasser, 800 ppm Natriumpersulfat, gelöst in 6 g VE-Wasser, 70 ppm Wasserstoffperoxid (35%-ig) gelöst in 1 g VE-Wasser hinzu. Danach wird die Polymerisation durch Zugabe von 9 ppm Ascorbinsäure gelöst in 2g Wasser gestartet, worauf eine deutliche Temperaturerhöhung eintritt. Nach Beendigung der Polymerisation wird der gelartige Polymerblock zerkleinert, gewölft und getrocknet. Das Polymer wird anschließend gemahlen und auf die Kornfraktion 150-800 μ abgesiebt.

EP 0 909 237 B1

**Tabelle 1**

| Bsp. | WS | NG | TAA | TMPTA | TMP3EO TA | PE5EO TA | PEG400 DA | AA10EO MA | TB [g/g] | AAP 0,3 [g/g] | LA | QSAP 0,3 | SG [sec] | RM [ppm] |
|---|---|---|---|---|---|---|---|---|---|---|---|---|---|---|
| B4 | 28 | 80 | 0,35 | | | | | 0,7 | 28,5 | 19,0 | 1,8 | 26,4 | | |
| B5 | 28 | 70 | 0,35 | | | | | 0,7 | 28,5 | 17,3 | 1 | 45,8 | 28 | |
| B6 | 28 | 75 | 0,45 | | | | | 0,7 | 26,5 | 21 | 1 | 47,5 | 32 | |
| B7 | 28 | 55 | 0,3 | 0,4 | | | | | 25,5 | 24,0 | 2,2 | 22,5 | | 450 |
| B8 | 24 | 50 | 0,3 | | | | | 0,8 | 22,9 | 19,2 | 1,4 | 30,1 | | 230 |
| B9 | 28 | 40 | 0,3 | 0,4 | | | | | 23,6 | 19,3 | 1,9 | 22,6 | | 300 |
| B10 | 28 | 40 | 0,3 | | 0,6 | | | | 25,1 | 19,1 | 1,9 | 23,3 | | 470 |
| B11 | 28 | 55 | 0,3 | | | 0,5 | | | 26,2 | 22,3 | 2 | 24,2 | | |
| B12 | 28 | 50 | 0,3 | 0,15 | | | | 0,6 | 26,6 | 20,2 | 1,9 | 24,6 | 33 | 490 |
| B13 | 24 | 40 | 0,3 | | | | | 0,8 | 20,0 | 19,1 | 1,9 | 20,6 | | 210 |

TAA: Triallylamin, TMPTA: Trimethylolpropantriacrylat, TMP3EOTA: Trimethylolpropan(3EO)triacrylat, PE3EOTA: Pentaery-thrit(3EO)tetraacrylat, PE5EOTA: Pentaerythrit(5EO)tetraacrylat, PEG400DA: Polyethylenglykol(400)diacrylat, AA10EOMA: Allylal-kohol(10EO)methacrylat - Die Zahlenangaben zu den Vernetzern bedeuten Gew.%/Acrylsäure

**Vergleichsbeispiele 1 - 6**

Entsprechend der Rezeptur von Beispiel wurden Polymerisate mit 28% WS unter Verwendung der in Tabelle 2 angegebenen Vernetzer hergestellt. V1 enthält lediglich 300 mg. Natriumperoxodisulfat und zusätzlich 0,4 Gew.% Natriumcarbonat. V2 enthält kein Wasserstoffperoxid. V3 wurde mit 600 mg Natriumperoxodisulfat hergestellt. Die Ergebnisse machen deutlich, daß Superabsorber, bei denen die eingesetzten Vemetzermengen außerhalb der erfindungsgemäßen Grenzen bzw. außerhalb der erfindungsgemäßen Zusammensetzungen liegen, die geforderten $Q_{SAP\,0,3}$ -Werte nicht aufweisen.

**Tabelle 2**

| Ansatz | NG [Mol%] | TAA [Gew.%] | TMP3EOTA [Gew.%] | PEG600DA [Gew.%] | AA-10EO-MA [Gew.%] | TB [g/g] | AAP 0,3 [g/g] | LA [Gew.%] | $Q_{SAP\,0,3}$ | SG [sec] | RM [ppm] |
|---|---|---|---|---|---|---|---|---|---|---|---|
| V1 | 70 | | | 0,1 | 0,2 | 44,6 | 7,5 | 11,1 | 4,7 | | 500 |
| V2 | 55 | 0,6 | | | | 25,1 | 20,5 | 3,3 | 13,8 | 45 | 200 |
| V3 | 40 | 0,25 | | | 0,3 | 30 | 8,5 | 6,5 | 5,9 | 42 | 210 |
| V4 | 30 | 0,2 | | | 0,3 | 26 | 9,8 | 6,1 | 5,8 | 48 | 155 |
| V5 | 55 | | 1,25 | | | 26 | 19,7 | 3,4 | 13,4 | | 700 |
| V6 | 55 | | 1,0 (PE5EOTA) | | | 25,2 | 24,9 | 3,0 | 16,7 | | 790 |

TAA: Triallylamin, TMP3EOTA: Trimethylolpropan(3EO)triacrylat, PEG600DA: Polyethylenglykol(600)diacrylat, AA-10EO-MA: Methacrylatester eines mit 10 Mol EO veretherten Allylalkohols, PE5EOTA: Pentaerythrit(5EO)tetraacrylat

EP 0 909 237 B1

**Vergleichsbeispiel 7**

In diesem Beispiel ist ein Superabsorber mit einer Menge N,N-Methylenbisacryiamid vernetzt, wie sie in den Ausführungsbeispielen der US 4 677 174 eingesetzt wird. Derartig gering vernetzte Absorber werden in der EP 562 846 A1 für den Einsatz in Saugunterlagen für Lebensmittel beschrieben.
In Anlehnung an den Ablauf des erfindungsgemäßen Beispiels 4 werden 280 g Acrylsäure mit äquimolaren Mengen Natronlauge und Ammoniumhydroxid zu 90% neutralisiert und mit 26,5 mg N,N-Methylenbisacrylamid (0,009 Gew.% auf Acrylsäure) als Vernetzerkomponente polymerisiert.
Das Polymerisat ist schlecht vernetzt und weist außerordentlich hohe lösliche Anteile von 74 Gew.% auf, die für einen Einsatz in Saugunterlagen für Lebensmittel nicht akzeptabel sind.

**Beispiel 14**

Der erfindungsgemäße Superabsorber aus Beispiel 5 wird einer Nachvernetzungsreaktion unterzogen, wodurch die Eigenschaften des Absorbers bei der Flüssigkeitsaufnahme unter Druck, insbesondere unter hohem Druck (AAP 0,7) deutlich verbessert werden. 100 g des auf 150 bis 800μ abgesiebten Polymeren werden unter kräftigem Durchmischen mit einer Lösung aus 0,5 g Ethylencarbonat, 2 g VE-Wasser und 4 g Azeton vermischt und anschließend für 25 Minuten in einem Ofen auf eine Temperatur von 180°C erhitzt. Tabelle 3 zeigt die Eigenschaften des Superabsorbers **vor** und **nach** der Nachvernetzung. Die Verbesserung des Quotienten $Q_{SAP}$ für den nachvemetzten Superabsorber ist unverkennbar. Die mit solchen Superabsorbern gefüllten Saugunterlagen eignen sich insbesondere für die sichere Verpackung schwerer Lebensmittel.

Tabelle 3

| Beisp. | Absorber aus Beisp. | TB [g/g] | | AAP 0,3 [g/g] | | AAP 0,7 [g/g] | | LA [Gew.%] | | Q$_{SAP\,0,3}$ | | Q$_{SAP\,0,7}$ | |
|---|---|---|---|---|---|---|---|---|---|---|---|---|---|
| | | vor | nach | vor | nach | vor | nach | von | nach | vor | nach | vor | nach |
| 14 | 5 | 28,5 | 26,4 | 17,3 | 28,9 | 7,7 | 23,5 | 1 | 1,2 | 45,8 | 46,1 | 36,2 | 41,5 |

**Beispiel 15**

In Anlehnung an die Polymerisationsvorschrift der Beispiele 4-13 wird ein erfindungsgemäß zu verwendender Superabsorber mit der Maßgabe hergestellt, daß bei einer WS von 28 Gew.% und einem Neutralisationsgrad von 40 % fiir die Vernetzung 0,3 Gew.% Triallylamin und 0,5 Gew.% PESEOTA verwendet werden und daß das entstandene Polymer anschließend gemäß Beispiel 14 mit Ethylencarbonat nachvernetzt wird. Die Eigenschaften sind wie folgt: TB = 21,8 g/g, AAP 0,3 = 24,7 g/g, AAP 0,7 = 20,5 g/g, LA = 1,9 Gew.%, $Q_{SAP\,0,3}$ = 24,5, $Q_{SAP\,0,7}$ = 22,3.

**Beispiel 16**

In Anlehnung an die Polymerisationsvorschrift der Beispiele 4-13 wird ein erfindungsgemäß zu verwendender Superabsorber bei einer WS von 28 Gew.% und einem Neutralisationsgrad von 55 % mit der Maßgabe hergestellt, daß 5 Gew. % Acrylsäure gegen Acrylamidopropansulfonsäure getauscht werden. Nachfolgend wird der Absorber entsprechend der Versuchsbeschreibung zu Beispiel 14 mit Ethylencarbonat nachvernetzt. Der Absorber weist die folgenden Eigenschaften auf: TB = 23 g/g, AAP 0,3 = 25 g/g, AAP 0,7 = 20,5 g/g, LA = 1,5 Gew.%, $Q_{SAP\,0,3}$ = 32, $Q_{SAP\,0,7}$ = 29.

**Beispiel 17**

In Anlehnung an die Polymerisationsvorschrift der Beispiele 4-13 wird ein erfindungsgemäß zu verwendender Superabsorber bei einer WS von 28 Gew.% und einem Neutralisationsgrad von 55 % mit der Maßgabe hergestellt, daß als Pfropfgrundlage zusätzlich 1 Gew.% teilverseifter Polyvinylalkohol Typ Mowiol 5/88 (Fa. Hoechst AG, Deutschland) in der zu polymerisierenden Monomermischung vorhanden ist. Nachfolgend wird der Absorber entsprechend der Versuchsbeschreibung zu Beispiel 14 mit Ethylencarbonat nachvernetzt. Der Absorber hat die folgenden Eigenschaften:
TB = 24,4 g/g, AAP 0,3 = 26 g/g, AAP 0,7 = 22 g/g, LA = 1,7 Gew.%, $Q_{SAP\,0,3}$ = 29,6, $Q_{SAP\,0,7}$ = 27,3.

**Vergleichsbeispiele 8 - 11**

Die Eigenschaften handelsüblicher Superabsorber, die für die Verwendung in Saugunterlagen für Lebensmittel angeboten werden, wurden bestimmt. Die Angaben befinden sich in der Tabelle 4.

Tabelle 4

| Vergleich | Absorber | TB [g/g] | AAP 0,3 [g/g] | LA [Gew.%] | $Q_{SAP\,0,3}$ | SG [sec] |
|---|---|---|---|---|---|---|
| V8 | Sanwet IM 1000 #1 | 49,0 | 7,0 | 5,2 | 10,8 | 31 |
| V9 | Sanwet IM 3900 #2 | 33,5 | 13,0 | 5,1 | 9,1 | 32 |
| V10 | Sanwet IM 5000S #3 | 31,0 | 20,0 | 6,6 | 7,7 | |
| V11 | Salsorb 90P #4 | 26,5 | 24,0 | 8,1 | 5,9 | 22 |
| #1-#3: Superabsorber aus Stärke/Polyacrylat der Fa. Hoechst AG | | | | | | |
| #4: Superabsorber aus vernetztem Polyacrylat der Fa. Allied Colloids Ltd. | | | | | | |

Die untersuchten Superabsorber für handelsübliche Saugunterlagen erfüllen nicht die erfindungsgemäßen Anforderungen an den Quotienten $Q_{SAP\,0,3}$.

**Beispiel 18**

Es werden Saugunterlagen mit einem Gesamtgewicht von 0,59 g, bestehend aus Teebeuteln (100 mm x100 mm = 1 dm$^2$) mit einer Füllung aus 0,2 g Superabsorber des Beispiels 6 bzw. des Vergleichsbeispiels 1 hergestellt und entsprechend der Methode für die Migrationsbestimmung in destilliertem Wasser und in 0,2%iger Kochsalzlösung untersucht. Die Ergebnisse in Tabelle 5 machen deutlich, daß nur die erfindungsgemäße Saugunterlage mit einem Superabsorber aus Beispiel 6 mit $Q_{SAP\,0,3}$ = 47,5 die erfindungsgemäß geforderten niedrigen Migrationswerte von ≤ 15 mg/g Saugunterlage erreicht. Die Saugunterlage mit dem Absorber aus dem Vergleichsbeispiel V1, der ein $Q_{SAP\,0,3}$ = 4,7 aufweist, zeigt unbefriedigend hohe Migrationswerte.

## Tabelle 5

| Superabsorber aus Beispiel | Überschuß an Testflüssigkeit | Migrationswert [mg/dm² bzw. mg/g Saugunterlage] | Überschuß an Testflüssigkeit | Migrationswert [mg/dm² bzw. mg/g Saugunterlage] | Überschuß an Testflüssigkeit | Migrationswert [mg/dm² bzw. mg/g Saugunterlage] | Überschuß an Testflüssigkeit | Migrationswert [mg/dm² bzw. mg/g Saugunterlage] |
|---|---|---|---|---|---|---|---|---|
| B6 | 50 ml dest. Wasser | 4,5 bzw. 7,6 | 100 ml dest. Wasser | 5,7 bzw. 9,6 | 50 ml 0,2%ige NaCl-Lsg. | 2,2 bzw. 3,7 | 100 ml 0,2%ige NaCl-Lsg. | 4,1 bzw. 6,9 |
| V1 | 50 ml dest. Wasser | 11,3 bzw. 19,2 | 100 ml dest. Wasser | 14,9 bzw. 25,2 | 50 ml 0,2%ige NaCl-Lsg. | 18,2 bzw. 30,8 | 100 ml 0,2%ige NaCl-Lsg. | 20,0 bzw. 33,9 |

**Beispiel 19**

Es werden Saugunterlagen mit einem Gesamtgewicht von 0,59 g, bestehend aus Teebeuteln (100 mm x100 mm = 1 dm$^2$) mit einer Füllung aus 0,2 g Superabsorber des Beispiels 6 bzw. des Vergleichsbeispiels 1 hergestellt und entsprechend der Methode für die Migrationsbestimmung in 80 ml 0,9%iger Kochsalzlösung untersucht. Die Ergebnisse zeigen die Überlegenheit der erfindungsgemäßen Saugunterlagen bezüglich geringster Migrationswerte.

Tabelle 6

| Superabsorber aus Beispiel | Menge an Test- flüssigkeit | Migrationswert [mg/dm$^2$ bzw. mg/g Saugunterlage] |
|:---:|:---:|:---:|
| B6 | 80 ml 0,9%ige NaCl-Lsg. | 9,1 bzw. 15,0 |
| V1 | 80 ml 0,9%ige NaCl-Lsg. | 20,2 bzw. 34,2 |

**Vergleichsbeispiel 12**

Es wurden handelsübliche Saugunterlagen fiir Lebensmittel hinsichtlich ihrer Migrationseigenschaften in 0,2 und 0,9%iger Kochsalzlösung untersucht. Die Produkte weisen gegenüber denen der Erfindung eine deutlich höhere Migration auf.

Messungen in dest. Wasser waren nicht möglich, da die Saugunterlagen durch die gequollenen Absorberteilchen zum Platzen gebracht wurden.

**Tabelle 7a**

| Handelsprodukt | Überschuß an Testflüssigkeit | Migrationswert [mg/dm² bzw. mg/g Saugunterlage] | Überschuß an Testflüssigkeit | Migrationswert [mg/dm² bzw. mg/g Saugunterlage] |
|---|---|---|---|---|
| THERMAFREEZE# | 50 ml 0,9%ige NaCl-Lsg. | 58,2 bzw. 21,3 | 100 ml 0,9%ige NaCl-Lsg. | 80,6 bzw. 29,5 |
| Sorba-Freeze Pads## | 50 ml 0,9%ige NaCl-Lsg. | 142,7 bzw. 34,9 | 100 ml 0,9%ige NaCl-Lsg. | 183,5 bzw. 44,9 |

#: Handelsprodukt der Fa. Therma Rite, Australien/Dänemark

##: Handelsprodukt der Fa. Sorba-Freeze Ltd, Schottland

**Tabelle 7b**

| Handelsprodukt | Überschuß an Testflüssigkeit | Migrationswert [mg/dm² bzw. mg/g Saugunterlage] | Überschuß an Testflüssigkeit | Migrationswert [mg/dm² bzw. mg/g Saugunterlage] |
|---|---|---|---|---|
| THERMAFREEZE# | 50 ml 0,2%ige NaCl-Lsg. | 51,8 bzw. 19,0 | 100 ml 0,2%ige NaCl-Lsg. | 61,2 bzw. 22,4 |
| Sorba-Freeze Pads ## | 50 ml 0,2%ige NaCl-Lsg. | 127,7 bzw. 31,2 | 100 ml 0,2%ige NaCl-Lsg. | 146,4 bzw. 36,9 |

**Vergleichsbeispiel 13**

Aus der Saugunterlage THERMAFREEZE wird der darin enthaltene Superabsorber isoliert und seine Eigenschaften werden bestimmt. TB = 24,5 g/g, AAP 0,3 = 19,5 g/g, LA = 2,4 Gew.%, $Q_{SAP}$ 0,3= 18,3. Bezüglich der erfindungsgemäßen Anforderungen liegen die Migrationswerte deutlich über dem Grenzwert von 15 mg/g und der $Q_{SAP\ 0.3}$ des verwendeten Superabsorbers unter dem Grenzwert von 20.

**Vergleichsbeispiel 14**

In einer sterilen Petrischale wird ein nicht steriler Pappteller (handelsüblich als Lebensmittelunterlage) mit 18 ml steriler Caso-Bouillon getränkt und 48 h bei 30°C inkubiert. Ergebnis: Auf dem Pappteller wachsen Bakterien, erkennbar an einer Schleimbildung und am intensiven Geruch bakterieller Zersetzungstätigkeit.

**Vergleichsbeispiel 15**

In einer sterilen Petrischale werden 18 ml steriler Caso-Bouillon 48 h bei 30°C inkubiert. Ergebnis: In der Bouillon sind weder Bakterien noch Pilze nachweisbar.

**Vergleichsbeispiel 16**

In einer nicht sterilen Petrischale werden 18 ml steriler Caso-Bouillon 48 h bei 30°C inkubiert.
Ergebnis: In der Bouillon wachsen Bakterien und Schimmelpilze, erkennbar an der Trübung der Bouillon und am intensiven Geruch bakterieller Zersetzungstätigkeit.

**Beispiel 20**

Teebeutel ohne und mit Superabsorber nach Beispiel 5 (0,5 g/dm$^2$) wurden in eine Petrischale von 20 cm Durchmesser gelegt und entsprechend den in der folgenden Tabelle unter Inkubation genannten Bedingungen unterworfen. Die Inkubation selbst erfolgte fiir 24 h im Brutschrank bei 37°C. Eine zusätzliche Kontamination durch Keime erfolgte nicht. Wie in dem Kapitel über die Prüfmethoden bereits dargestellt, erfolgte die Messung der mikrobiellen Aktivität nach einem dünnschichtchromatographischen Verfahren bei dem die Angabe der relativen Peakhöhen mit der Keimzahl korreliert. Es wird deutlich, daß die Verwendung des erfindungsgemäßen Polymers im Teebeutel ursächlich fiir die rapide Abnahme mikrobieller Aktivität verantwortlich ist:

Tabelle 8

| Versuch | Inkubation | relative Peakhöhe |
|---|---|---|
| A | Teebeutel ohne Polymer Zugabe von 5 ml Auftauwasser und Zugabe von 2 Tropfen TTC-Lösung | 5626 |
| B | Teebeutel mit Polymer Zugabe von 5 ml Auftauwasser und Zugabe von 2 Tropfen TTC-Lösung | 745 |
| C | wie B, jedoch ohne Inkubation im Brutschrank, sondern sofortige Messung | 728 |

**Beispiel 21**

In einer sterilen Petrischale wird ein nicht steriles, superabsoberhaltiges (Beispiel 6, 0,5g/dm$^2$) Zellulosevlies mit 18 ml steriler Casein-Sojamehlpepton-Bouillon (Caso-Bouillon), der 4 Tropfen 1%ige TTC-Lösung zugesetzt wurden, getränkt und 48 h bei 30°C inkubiert. Ergebnis: Auf dem Vlies sind lediglich zwei rote Bakterienkolonien erkennbar. Eine Geruchsveränderung aufgrund bakterieller Zersetzungstätigkeit ist nicht wahrnehmbar.
Ein **Vergleichsversuch** mit absorberfreiem Zellulosevlies zeigt bakterielles Wachstum, ersichtlich an der kräftigen Rotfärbung des ganzen Vlieses und durch einen intensiven Geruch aufgrund bakterieller Stoffwechseltätigkeit.

**Patentansprüche**

1. Saugfähige Einlage für Verpackungen bestehend aus einer oberen und einer unteren Deckschicht und einem wäßrige Flüssigkeiten absorbierenden Kern, der absorbierende Polymere enthält, **dadurch gekennzeichnet, daß** die absorbierenden Polymeren einen Quotient $Q_{SAP\ 0,3}$ berechnet aus Retention und Absorption unter Druck bei 0,3 psi (21 g/cm$^2$) und aus der Menge an löslichen Anteilen von mindestens 20 und eine Retention von mindestens 22 g/g jeweils gemessen und berechnet nach den in der Beschreibung angegebenen Methoden aufweisen.

2. Saugfähige Einlage nach Anspruch 1, **dadurch gekennzeichnet, daß** die Polymeren einen $Q_{SAP\ 0,3}$ von mindestens 30, bevorzugt von mindestens 40, aufweisen.

3. Absorbierende Einlage nach Ansprüchen 1 oder 2, **dadurch gekennzeichnet, daß** die absorbierenden Polymere eine Retention von mindestens 25 g/g, bevorzugt von mindestens 28 g/g aufweisen.

4. Absorbierende Einlage nach einem der Ansprüche 1 bis 3, **dadurch gekennzeichnet, daß** die absorbierenden Polymere eine Absorption unter Druck von mindestens 15 g/g, vorzugsweise von mindestens 19 g/g und besonders bevorzugt von mindestens 22 g/g aufweisen.

5. Absorbierende Einlage nach einem der Ansprüche 1 bis 4, **dadurch gekennzeichnet, daß** die löslichen Anteile der absorbierenden Polymeren höchstens 3,5, vorzugsweise höchstens 2,5, besonders bevorzugt höchstens 1,5 Gew.% betragen.

**6.** Absorbierende Einlage nach einem der Ansprüche 1 bis 5, **dadurch gekennzeichnet, daß** sie Migrationswerte von $\leq 15$ mg/g, vorzugsweise $\leq 10$ mg/g, besonders bevorzugt $\leq 5$ mg/g absorbierender Einlage aufweisen.

**7.** Absorbierende Einlage nach einem der Ansprüche 1 bis 6, **dadurch gekennzeichnet, daß** die obere und untere Deckschicht aus Kunststoff- oder Zellulosefolien bzw. Geweben oder Vliesen besteht und daß zumindest ein Teil der Deckschichtfolie aufgrund von Perforationen durchlässig für Wasser oder wäßrige Flüssigkeiten ist.

**8.** Absorbierende Einlage nach einem der Ansprüche 1 und 7, **dadurch gekennzeichnet, daß** der absorbierende Kern aus Vlies, Fasern oder Gewebe besteht, in dem die die wäßrige Flüssigkeiten absorbierenden Polymere verteilt und gegebenenfalls fixiert sind.

**9.** Absorbierende Einlage nach Anspruch 8, **dadurch gekennzeichnet, daß** der absorbierende Kern eine schichtweise Anordnung der absorbierenden Polymerteilchen innerhalb des Kerns aus Fasern oder Gewebe aufweist.

**10.** Absorbierende Einlage nach Anspruch 8 oder 9, **dadurch gekennzeichnet, daß** die Fasern Hohlfasern sind.

**11.** Absorbierende Einlage nach einem der Ansprüche 1 bis 10, **dadurch gekennzeichnet, daß** die absorbierenden Polymeren aus teilneutralisierten, monoethylenisch ungesättigten, Säuregruppen tragenden Monomeren, gegebenenfalls weiteren, damit copolymerisierbaren Monomeren, aus Vernetzern sowie gegebenfalls als Pfropfgrundlage geeigneten Polymeren aufgebaut sind.

**12.** Absorbierende Einlage nach Ansprüchen 1 bis 11, **dadurch gekennzeichnet, daß** als ungesättigte, Säuregruppen tragende Monomeren Acrylsäure, Methacrylsäure, Vinylessigsäure, Vinylsulfonsäure, Methallylsulfonsäure, Maleinsäure, 2-Acrylamido-2-methylpropansulfonsäure oder deren Gemische eingesetzt worden sind.

**13.** Absorbierende Einlage nach einem der Ansprüche 11 oder 12, **dadurch gekennzeichnet, daß** die absorbierenden Polymere 0 bis 40 Gew.% weiterer copolymerisierbarer Monomere, vorzugsweise Vinylpyrrolidon, Hydroxyethylacrylat, Vinylacetamid, Alkylaminoalkyl(meth-)acrylate oder deren Gemische enthalten.

**14.** Absorbierende Einlage nach einem der Ansprüche 11 bis 13, **dadurch gekennzeichnet, daß** die absorbierenden Polymere bis zu 30 Gew.% wasserlöslicher Polymere als Pfropfgrundlage, vorzugsweise Polysaccharide und/oder Polyvinylalkohol enthalten.

**15.** Absorbierende Einlage nach einem der Ansprüche 11 bis 14, **dadurch gekennzeichnet, daß** die absorbierenden Polymeren unter Einsatz einer Vernetzerkombination aus einem Vernetzer vom Typ A mit wenigstens einem weiteren Vernetzer vom Typ B oder Typ C erhalten worden sind, wobei als Typ A ein Di- und/oder Triallylamin, als Typ B ein (Meth)acrylatester von Polyolen und als Typ C ein (Meth)acrylatester alkoxylierter (Meth)allylalkohole verwendet worden ist.

**16.** Absorbierende Einlage nach Anspruch 15, **dadurch gekennzeichnet, daß** die absorbierenden Polymeren mit einer Vernetzerkombination hergestellt worden sind, die sich aus

I 0,05 bis 0,8 Gew.%, vorzugsweise 0,2 bis 0,6 Gew.% Vernetzern vom Typ A,
0,05 bis 1,4 Gew.%, vorzugsweise 0,1 bis 1,0 Gew.% Vernetzern vom Typ B und optional 0 bis 0,5 Gew.% Vernetzern vom Typ C,
oder aus

II 0,05 bis 0,8, vorzugsweise 0,3 bis 0,8 Gew.% Vernetzern vom Typ A, 0,05 bis 1,5 Gew.%, vorzugsweise 0,4 bis 0,9 Gew.% Vernetzern vom Typ C und optional 0 bis 0,5 Gew.% Vernetzern vom Typ B,

zusammensetzen, mit der Maßgabe, daß die Gesamtkonzentration der Vernetzer, bezogen auf die eingesetzten Monomeren, 0,7 bis 2,0 Gew.%, vorzugsweise 0,9 bis 1,5 Gew.% beträgt.

**17.** Absorbierende Einlage nach Anspruch 15 oder 16, **dadurch gekennzeichnet, daß** die absorbierenden Polymeren mit einer Vernetzerkombination hergestellt worden sind, die sich aus Diallylamin und/oder Triallylamin als Vernetzertyp A, Trimethylolpropan-oxethylat-(meth)acrylsäureester und/oder der Glycerinoxethylat-(meth)acrylsäureester und/oder der Pentaerythrit-oxethylat-(meth)acrylsäureester und/oder Polyethylenglykol-$\alpha,\omega$-di(meth)acrylsäureester als Vernetzertyp B und (Meth)allylpolyethylenglykol-(meth)acrylsäureester als Vernetzertyp C zusammensetzt mit der Maßgabe, daß in der Vernetzerkombination ein Vernetzer vom Typ A mit mindestens einem Vernetzer vom Typ B oder C vorhanden sind.

18. Absorbierende Einlage nach einem der Ansprüche 1 bis 17, **dadurch gekennzeichnet, daß** die absorbierenden Polymeren an der Oberfläche mit einem Nachvernetzer vernetzt worden sind und diese Nachvernetzung gegebenenfalls mehrfach wiederholt worden ist.

19. Absorbierende Einlage nach Anspruch 11, **dadurch gekennzeichnet, daß** die absorbierenden Polymeren an der Oberfläche mit einem Nachvernetzer aus der Gruppe der Polyole, Polyepoxide, Polyamine oder Alkylencarbonate vernetzt worden ist.

20. Absorbierende Einlage nach einem der Ansprüche 1 bis 19, **dadurch gekennzeichnet, daß** sie eine durchgehend einheitliche Struktur oder eine wabenförmige Struktur aufweist.

21. Verwendung der absorbierenden Einlage nach einem der Ansprüche 1 bis 20 als Saugunterlage.

22. Verwendung der absorbierenden Einlage nach einem der Ansprüche 1 bis 21 in Lebensmittelverpackungen, als Eis-Ersatz oder als Auslaufschutz in Transportverpackungen.

## Claims

1. An absorbent insert for packaging consisting of an upper and a lower outer layer and an aqueous liquid-absorbing core, which contains absorbent polymers, **characterised in that** the absorbent polymers exhibit a quotient $Q_{SAP\,0.3}$ of at least 20 calculated from retention and absorption under a pressure of 0.3 psi (21 g/cm$^2$) and from the quantity of soluble fractions and a retention level of at least 22 g/g, in each case measured and calculated using the methods stated in the description.

2. An absorbent insert according to claim 1, **characterised in that** the polymers exhibit a $Q_{SAP\,0.3}$ of at least 30, preferably of at least 40.

3. An absorbent insert according to claim 1 or 2, **characterised in that** the absorbent polymers exhibit retention of at least 25 g/g, preferably of at least 28 g/g.

4. An absorbent insert according to one of claims 1 to 3, **characterised in that** the absorbent polymers exhibit absorption under pressure of at least 15 g/g, preferably of at least 19 g/g and particularly preferably of at least 22 g/g.

5. An absorbent insert according to one of claims 1 to 4, **characterised in that** the soluble fractions of the absorbent polymers amount to at most 3.5, preferably at most 2.5, particularly preferably at most 1.5 wt.%.

6. An absorbent insert according to one of claims 1 to 5, **characterised in that** it exhibits migration values of < 15 mg/g, preferably of ≤ 10 mg/g, particularly preferably of ≤ 5 mg/g of absorbent insert.

7. An absorbent insert according to one of claims 1 to 6, **characterised in that** the upper and lower outer layer consists of plastics or cellulose films or woven fabrics or nonwovens and that at least part of the outer layer film is permeable to water or aqueous liquids by virtue of perforations.

8. An absorbent insert according to one of claims 1 and 7, **characterised in that** the absorbent core consists of nonwovens, fibres or woven fabric in which the aqueous liquid-absorbing polymers are distributed and optionally fixed.

9. An absorbent insert according to claim 8, **characterised in that** the absorbent core exhibits a layered arrangement of the absorbent polymer particles inside the core of fibres or woven fabric.

10. An absorbent insert according to claim 8 or 9, **characterised in that** the fibres are hollow fibres.

11. An absorbent insert according to one of claims 1 to 10, **characterised in that** the absorbent polymers are synthesised from partially neutralised, monoethylenically unsaturated, acid group-bearing monomers, optionally further monomers copolymerisable therewith, from crosslinking agents, optionally together with polymers suitable as a grafting backbone.

12. An absorbent insert according to one of claims 1 to 11, **characterised in that** the acid group-bearing monomers used are acrylic acid, methacrylic acid, vinylacetic acid, vinylsulfonic acid, methallylsulfonic acid, maleic acid, 2-acrylamido-2-methylpropanesulfonic acid or mixtures thereof.

13. An absorbent insert according to one of claims 11 or 12, **characterised in that** the absorbent polymers contain 0 to 40 wt.% of further copolymerisable monomers, preferably vinylpyrrolidone, hydroxyethyl acrylate, vinylacetamide, alkylaminoalkyl (meth)acrylates or mixtures thereof.

14. An absorbent insert according to one of claims 11 to 13, **characterised in that** the absorbent polymers contain up to 30 wt.% of water-soluble polymers, preferably polysaccharides and/or polyvinyl alcohol, as a grafting backbone.

15. An absorbent insert according to one of claims 11 to 14, **characterised in that** the absorbent polymers have been obtained using a crosslinking agent combination comprising a type A crosslinking agent with at least one further type B or type C crosslinking agent, wherein a di- and/or triallylamine has been used as type A, a (meth)acrylate ester of polyols as type B and a (meth)acrylate ester of alkoxylated (meth)allyl alcohols as type C.

16. An absorbent insert according to claim 15, **characterised in that** the absorbent polymers have been produced with a crosslinking agent combination composed of

    I 0.05 to 0.8 wt.%, preferably 0.2 to 0.6 wt.% of type A crosslinking agents,
    0.05 to 1.4 wt.%, preferably 0.1 to 1.0 wt.% of type B crosslinking agents and optionally 0 to 0.5 wt.% of type C crosslinking agents,
    or of

    II 0.05 to 0.8, preferably 0.3 to 0.8 wt.% of type A crosslinking agents, 0.05 to 1.5 wt.%, preferably 0.4 to 0.9 wt.% of type C crosslinking agents and optionally 0 to 0.5 wt.% of type B crosslinking agents,

    with the proviso that the total concentration of crosslinking agents, relative to the monomers used, is 0.7 to 2.0 wt. %, preferably 0.9 to 1.5 wt.%.

17. An absorbent insert according to claim 15 or 16, **characterised in that** the absorbent polymers have been produced with a crosslinking agent combination which is composed of diallylamine and/or triallylamine as type A crosslinking agent, ethoxylated trimethylolpropane (meth)acrylic acid ester and/or ethoxylated glycerol (meth)acrylic acid ester and/or ethoxylated pentaerythritol (meth)acrylic acid ester and/or polyethylene glycol $\alpha,\omega$-di(meth)acrylic acid ester as type B crosslinking agent and (meth)allyl polyethylene glycol (meth)acrylic acid ester as type C crosslinking agent, with the proviso that the crosslinking agent combination contains a type A crosslinking agent with at least one type B or C crosslinking agent.

18. An absorbent insert according to one of claims 1 to 17, **characterised in that** the absorbent polymers have been superficially post-crosslinked with a post-crosslinking agent and this post-crosslinking has optionally been performed repeatedly.

19. An absorbent insert according to claim 11, **characterised in that** absorbent polymers have been superficially post-crosslinked with a post-crosslinking agent from the group of polyols, polyepoxides, polyamines or alkylene carbonates.

20. An absorbent insert according to one of claims 1 to 19, **characterised in that** it exhibits a continuous, unitary structure or a honeycomb structure.

21. Use of the absorbent insert according to one of claims 1 to 20 as an absorbent pad.

22. Use of the absorbent insert according to one of claims 1 to 21 in foodstuffs packages, as an ice substitute or for leakage prevention in transport packages.

**Revendications**

1.  Insertion absorbante pour des emballages, qui consiste en une couche de couverture supérieure et inférieure et d'un noyau qui absorbe les fluides aqueux, qui contient des polymères absorbants,
    **caractérisée en ce que**
    les polymères absorbants possèdent un quotient $Q_{SAP0,3}$ calculé à partir de la rétention et de l'absorption sous pression à 0,3 psi (21 g/cm$^2$) et à chaque fois mesuré à partir de la quantité de fractions solubles d'au moins 20 et une rétention d'au moins 22 g/g et calculé selon les méthodes indiquées dans la description.

2.  Insertion absorbante selon la revendication 1,
    **caractérisée en ce que**
    les polymères possèdent un coefficient $Q_{SAP0,3}$ d'au moins 30, de préférence d'au moins 40.

3.  Insertion absorbante selon la revendication 1 ou la revendication 2,
    **caractérisée en ce que**
    les polymères absorbants possèdent une rétention d'au moins 25 g/g, de préférence d'au moins 28 g/g.

4.  Insertion absorbante selon l'une des revendications 1 à 3,
    **caractérisée en ce que**
    les polymères absorbants possèdent une absorption sous pression d'au moins 15 g/g, de préférence d'au moins 19 g/g et d'une manière particulièrement préférée, d'au moins 22 g/g.

5.  Insertion absorbante selon l'une des revendications 1 à 4,
    **caractérisée en ce que**
    les fractions solubles des polymères absorbants s'élèvent à au maximum 3,5, de préférence au maximum 2,5 et d'une manière particulièrement préférée au maximum à 1,5 % en poids.

6.  Insertion absorbante selon l'une des revendications 1 à 5,
    **caractérisée en ce que**
    elle possède des valeurs de migration $\leq$ 15 mg/g de préférence $\leq$ 10 mg/g et d'une manière particulièrement préférée $\leq$ 5 mg/g d'insertion absorbante.

7.  Insertion absorbante selon l'une des revendications 1 à 6,
    **caractérisée en ce que**
    les couches de couverture supérieure et inférieure sont formées de feuilles de matière plastique ou de cellulose, ou de tissus ou de non-tissés, et au moins une partie des feuilles de couche de couverture est perméable à l'eau ou aux liquides aqueux grâce à des perforations.

8.  Insertion absorbante selon l'une des revendications 1 et 7,
    **caractérisée en ce que**
    le noyau absorbant consiste en du non-tissé, des fibres ou des tissus, dans lequel les polymères qui absorbent les liquides aqueux, sont répartis et éventuellement fixés.

9.  Insertion absorbante selon la revendication 8,
    **caractérisée en ce que**
    le noyau absorbant possède une disposition stratifiée des particules de polymère absorbants à l'intérieur du noyau en fibres ou en tissus.

10. Insertion absorbante selon la revendication 8 ou la revendication 9,
    **caractérisée en ce que**
    les fibres sont des fibres creuses.

11. Insertion absorbante selon l'une des revendications 1 à 10,
    **caractérisée en ce que**
    les polymères absorbants sont constitués par des monomères qui portent des groupes acides, non saturés mono-éthyléniquement, partiellement neutralisés le cas échéant par d'autres monomères copolymérisables avec ceux-ci, des agents de réticulation ainsi qu'éventuellement des polymères appropriés comme fondement de greffage.

**12.** Insertion absorbante selon les revendications 1 à 11,
**caractérisée en ce que**
comme monomères portant des groupes acides non saturés, on a mis en oeuvre de l'acide acrylique, de l'acide méthacrylique, de l'acide vinylacétique, de l'acide vinylsulfonique, de l'acide méthallylsulfonique, de l'acide maléique, de l'acide 2-acrylamido 2-méthylpropane sulfonique ou leurs mélanges.

**13.** Insertion absorbante selon l'une des revendications 11 ou 12,
**caractérisée en ce que**
les polymères absorbants renferment de 0 à 40 % en poids d'autres monomères copolymérisables de préférence la vinylpyrolidone, l'acrylate d'hydroxyéthyle, le vinylacétamide, le (méth)acrylate d'alkylamino alkyle ou leurs mélanges.

**14.** Insertion absorbante selon l'une des revendications 11 à 13,
**caractérisée en ce que**
les polymères absorbants renferment jusqu'à 30 % en poids de polymères solubles dans l'eau comme fondement de greffage, de préférence des polysaccharides et/ou de l'alcool polyvinylique.

**15.** Insertion absorbante selon l'une des revendications 11 à 14,
**caractérisée en ce que**
lés polymères absorbants ont été obtenus en utilisant une combinaison d'agents réticulants à base d'un agent réticulant du type A avec au moins un autre agent réticulant du type B ou type C, dans lesquels on a utilisé comme type A une di- et/ou triallylamine, comme type B un ester d'acide(méth) acrylique de polyols et comme type C un ester d'acide méthacylique de (méth) allylalcools alkoxylés.

**16.** Insertion absorbante selon la revendication 15,
**caractérisée en ce que**
les polymères absorbants ont été préparés avec une combinaison d'agents réticulants qui se composent de :

I - de 0,05 à 0,8 % en poids, de préférence de 0,2 à 0,6% en poids d'agents réticulants du type A,
de 0,05 à 1,4 %, de préférence de 0,1 à 1,0 %en poids d'agents réticulants du type B, et optionnellement de 0 à 0,5 % en poids d'agents réticulants du type C,
ou de :
II - de 0,05 à 0,8 % en poids, de préférence de 0,3 à 0,8 % en poids d'agents réticulants du type A, de 0,05 à 1,5 % en poids, de préférence de 0,4 à 0,9 % en poids d'agents réticulants du type C et optionnellement de 0 à 0,5 % en poids d'agents réticulants du type B

avec la restriction que la concentration totale de l'agent réticulant rapporté aux monomères mis en oeuvre s'élève à de 0,7 à 2,0 % en poids, de préférence de 0,9 à 1,5 % en poids.

**17.** Insertion absorbante selon la revendication 15 ou la revendication 16,
**caractérisée en ce que**
les polymères absorbants ont été préparés avec une combinaison d'agents réticulants, composée de diallylamine et/ou de triallylamine comme agent réticulant de type A, de l'ester d'acide (méth)acrylique d'oxéthylate de triméthylolpropane et/ou de glycérol et/ou de pentaérythritol, et/ou de l'ester d'acide $\alpha$, $\omega$-di(méth)acrylique de polyéthylèneglykol comme réticulant de type B, et de l'ester d'acide (méth)acrylique de méthallylpolyéthylène glycol comme agent réticulant de type C avec la restriction que dans la combinaison d'agents réticulants; un agent réticulant du type A avec au moins un agent réticulant du type B ou du type C sont présents.

**18.** Insertion absorbante selon l'une des revendications 1 à 17,
**caractérisée en ce que**
les polymères absorbants ont été réticulés à la surface avec un agent de post-réticulation et cette post-réticulation a été répétée éventuellement plusieurs fois.

**19.** Insertion absorbante selon la revendication 11,
**caractérisée en ce que**
les polymères absorbants à la surface ont été réticulés avec un agent de post-réticulation choisi dans le groupe des polyols, polyépoxydes, polyamines ou des carbonates d'alkylène.

**20.** Insertion absorbante selon l'une des revendications 1 à 19,
**caractérisée en ce que**
sa structure est continue uniforme ou alvéolaire.

**21.** Utilisation d'une insertion absorbante selon l'une des revendications 1 à 20,
comme support d'absorption.

**22.** Utilisation d'une insertion absorbante selon l'une des revendications 1 à 21, dans les emballages de produits
alimentaires comme substitut de glace ou comme protection contre les fuites dans les emballages de transport.